(19) Europäisches Patentamt
European Patent Office
Office européen des brevets

(11) **EP 4 393 698 A1**

(12) **EUROPEAN PATENT APPLICATION**
published in accordance with Art. 153(4) EPC

(43) Date of publication:
**03.07.2024 Bulletin 2024/27**

(21) Application number: **22861241.2**

(22) Date of filing: **18.08.2022**

(51) International Patent Classification (IPC):
**B32B 9/00** $^{(2006.01)}$     **B32B 27/36** $^{(2006.01)}$
**B65D 65/40** $^{(2006.01)}$

(52) Cooperative Patent Classification (CPC):
**B32B 9/00; B32B 27/36; B65D 65/40;** Y02W 30/80

(86) International application number:
**PCT/JP2022/031216**

(87) International publication number:
**WO 2023/026953 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2021 JP 2021137339**

(71) Applicant: **Toyobo Co., Ltd.**
**Kita-ku**
**Osaka-shi, Osaka 530-0001 (JP)**

(72) Inventors:
• **YAMAZAKI, Atsushi**
  **Inuyama-shi, Aichi 484-8508 (JP)**
• **Goto, Takamichi**
  **Inuyama-shi, Aichi 484-8508 (JP)**
• **YAMAGUCHI, Yuya**
  **Osaka-shi Osaka 530-8230 (JP)**

(74) Representative: **Vossius & Partner**
**Patentanwälte Rechtsanwälte mbB**
**Siebertstrasse 3**
**81675 München (DE)**

(54)     **LAMINATED FILM**

(57)     [Problem] A laminated film which has a coating layer and inorganic thin-film layer on one surface of a base material film, and which is characterized by satisfying the requirements (a) to (d) described below.
(a) The base material film contains a polyester resin that has been chemically recycled from PET bottles.
(b) The surface hardness of the laminated film on the inorganic thin-film layer surface is 120 N/mm2 or less.
(c) The coefficient of static friction $\mu s$ and the coefficient of dynamic friction $\mu d$ of the inorganic thin-film layer surface/opposite-side surface of the laminated film are both within the range of 0.20 to 0.40.
(d) The arithmetic mean roughness Ra across a 2 um square on the laminated film is within the range of 2.0 to 6.0 nm.

**Description**

TECHNICAL FIELD

The present invention relates to a laminated film used in the packaging field of food products, pharmaceutical products, industrial products, and the like. More specifically, the present invention relates to a laminated film including an inorganic thin film layer and a protective layer in this order on a substrate film layer obtained using a polyester resin recycled from PET bottles, which is excellent in barrier properties, adhesive properties, and processability.

BACKGROUND ART

In recent years, regulations for reducing the use of disposable plastics have been strengthened in various countries including Europe. Against this background, there is growing international awareness of resource circulation and growing waste problems in emerging countries. Therefore, for plastic packaging materials required for foods and pharmaceuticals and the like, environment-responsive products are required from the viewpoint of 3R (recycle, reuse, reduce).

Examples of performance required for the above-described environmentally friendly packaging material include being formed from recycled materials, having gas barrier performance that can cut off various kinds of gases and extend the best-before date, and using a material having less environmental burdens (for example, no organic solvent is used and the amount of materials used itself is small).

Polyester resin recycled from PET bottles is known as a typical recycled material, and a technique is known in which polyester resin derived from PET bottles with a low oligomer content is formed into a polyester film for body wrapping labels that causes fewer troubles due to static electricity without impairing productivity or quality (for example, see Patent Document 1). Demand for such films is expected to increase as environmental regulations become more stringent in the future.

Meanwhile, in food applications that require blocking of various kinds of gases such as water vapor and oxygen, gas barrier laminated bodies in which metal thin films formed of aluminum and the like and inorganic thin films formed of inorganic oxides such as silicon oxide and aluminum oxide are formed on the surface of substrate films formed of plastics are generally used. Among these, those in which thin films (inorganic thin film layers) of inorganic oxides such as silicon oxide, aluminum oxide, and a mixture thereof are formed are widely used since it is not necessary to use aluminum foil and these laminated bodies are transparent so that the contents can be confirmed.

Regarding the gas barrier films formed of recycled materials and inorganic thin films mentioned above, a laminated film has been proposed which exhibits favorable gas barrier properties when a gas barrier laminated film including an inorganic thin film layer and a sealant layer to exhibit low heat shrinkability and small thickness unevenness is formed using polyester resin recycled from PET bottles (for example, Patent Document 2). However, such conventional techniques are insufficient for applications requiring higher barrier performance. There has been no discussion regarding the performance resistant to retorting or processing suitability of the film. Furthermore, the inorganic thin film layer has a problem that the film is likely to crack by physical damage such as bending, resulting in a decrease in barrier properties.

As a means to maintain barrier properties and adhesive properties even after retorting, it has been reported that a covering layer formed of an oxazoline group-containing water-soluble polymer is provided between a substrate film and an inorganic thin film layer formed by, for example, a vapor deposition method (see, for example, Patent Document 3). It is also possible to continuously provide a covering layer between the substrate film and the inorganic thin film during formation of a film on the substrate, and greater cost reduction compared to a case of forming a protective layer on an inorganic thin film is expected. However, in the case of the above configuration, the covering layer itself does not exhibit gas barrier properties, and only the inorganic thin film layer largely contributes to gas barrier properties, and there is a problem that the gas barrier properties are not sufficient. The conventional techniques do not consciously use substrates having less environmental burdens, and there is a concern that the burdens on the environment are great.

As a means to improve the barrier properties of films formed of inorganic thin films, it is attempted to further provide a protective layer exhibiting gas barrier properties on the inorganic thin film. For example, there is a method in which an inorganic thin film is coated with a water-soluble polymer, an inorganic layered compound and a metal alkoxide or a hydrolysate thereof, and a composite of an inorganic substance containing an inorganic layered compound and the water-soluble polymer is formed on the inorganic thin film by a sol-gel method, and there is a laminated body in which an inorganic thin film is coated with meta-xylylene group-containing polyurethane (for example, see Patent Document 4). However, as a protective layer is provided, processing steps increase, and there are concerns about increases in cost and environmental burdens. There is also a problem that in order to improve the barrier performance by a protective layer, it is necessary to use a film thicker than a certain level and a special coating material, and these also cause increases in cost and environmental burdens. The conventional techniques do not consciously use substrates having less environmental burdens, and there is a concern that the burdens on the environment are great.

PRIOR ART DOCUMENTS

PATENT DOCUMENTS

Patent Document 1: JP-A-2012-91862
Patent Document 2: JP-B2-6500629
Patent Document 3: JP-B2-5560708
Patent Document 4: JP-B2-4524463

SUMMARY OF THE INVENTION

PROBLEMS TO BE SOLVED BY THE INVENTION

In Patent Document 2, there is room for improvement in the gas barrier properties of the inorganic thin film layer, and retortability and processing suitability have also not been discussed. In Patent Document 3, there is room for improvement in the gas barrier performance of the inorganic thin film layer, and burdens on the environment have not been taken into consideration. In Patent Document 4, burdens on the environment have not been taken into consideration.

The present invention has been devised in view of the problems of the conventional techniques.

In other words, an object of the present invention is to provide an environment-responsive laminated film including a covering layer and an inorganic thin film layer on a substrate film layer obtained using a polyester resin recycled from PET bottles, which is excellent in barrier performance, can maintain barrier properties and adhesive properties even after a severe heat-moisture treatment such as retort sterilization, and is excellent in processability.

MEANS FOR SOLVING THE PROBLEMS

The present inventors have discovered that the barrier properties of an inorganic thin film layer can be improved by controlling the surface hardness of an environment-responsive substrate film obtained using polyester resin recycled from PET bottles, further discovered that the barrier properties and adhesive properties can be maintained even after a severe heat-moisture treatment such as retorting by providing a covering layer between the substrate and the inorganic thin film layer, and thus completed the present invention.

In other words, the present invention has the following configuration.

(1) A laminated film including a covering layer and an inorganic thin film layer on one surface of a substrate film, in which the laminated film satisfies the following requirements (a) to (d):

(a) the substrate film contains a polyester resin chemically recycled from PET bottles,
(b) a surface hardness on an inorganic thin film layer surface of the laminated film is 120 N/mm$^2$ or less,
(c) a coefficient of static friction µs and a coefficient of dynamic friction µd of inorganic thin film layer surface/opposite side surface of the laminated film are both in a range of 0.20 to 0.40, and
(d) an arithmetic mean roughness Ra across a 2 um square of the laminated film is in a range of 2.0 to 6.0 nm.

(2) The laminated film according to (1), in which the covering layer contains a resin having an oxazoline group or a carbodiimide group as a constituent component.
(3) The laminated film according to (1) or (2), in which a content rate of an isophthalic acid component with respect to all carboxylic acid components in all polyester resins constituting the substrate film is 5.0 mol% or less.
(4) The laminated film according to any one of (1) to (3), in which the inorganic thin film layer is a layer of aluminum oxide or a composite oxide of silicon oxide and aluminum oxide.
(5) The laminated film according to any one of (1) to (4), including a protective layer containing a urethane resin on the inorganic thin film layer.
(6) A packaging material including a sealant layer laminated on one surface of the laminated film according to any one of (1) to (5).

EFFECT OF THE INVENTION

According to the present invention, it has become possible to provide a laminated film that is excellent in gas barrier properties of the inorganic thin film layer and excellent in barrier properties and adhesive properties even after a severe heat-moisture treatment such as retort sterilization while using recycled materials. Moreover, the laminated film of the present invention requires few processing steps, is excellent in processability, and can be easily produced, and a gas barrier film that is excellent in both economic efficiency and production stability and has homogeneous properties can be provided.

MODE FOR CARRYING OUT THE INVENTION

Hereinafter, the present invention will be described in detail.

[Substrate film]

In the substrate film in the present invention, it is preferable to use the following polyester resin employing recycled PET bottles as the biaxially oriented polyester film. By using polyester resin employing recycled PET bottles, it is possible to increase the ratio of recycled raw materials in the film and obtain an environmentally friendly film.

As polyester resin employing recycled PET bottles in accordance with the present invention, polyester resins (hereinafter sometimes referred to as "mechanically recycled polyester resins") obtained by physical reconstitution methods in which used PET bottles recovered from the market and/or society are separated, pulverized, and cleaned, and, following adequate removal of surface grime and foreign matter, are exposed to a high temperature, and following intensive cleaning carried out with respect to contaminants and the like which remain in the interior of the resin, are repelletized, and/or polyester resins (hereinafter sometimes referred to as "chemically recycled polyester resins") obtained by causing polyester resin contained in used container packaging to be decomposed to the monomer level, thereafter removing contaminants and the like therefrom, and carrying out repolymerization thereof, may be both suitably used, but it can be said that a chemically recycled polyester resin is more suitable from the viewpoint of hygienic properties. The substrate film of the present invention contains at least a chemically recycled polyester resin as an essential component.

The polyester resin employing recycled PET bottles, which may be employed in the biaxially oriented polyester film in accordance with the present invention is made up primarily of recycled containers that are made up primarily of polyethylene terephthalate; for example, recycled containers for tea drinks, soft drinks, and other such beverages may be favorably employed, it being possible for these to be oriented as appropriate, and while it is preferred that these be colorless, presence of some colorant component is possible.

The recycled raw material recycled from the market and society, including PET bottles, which can be preferably utilized, is polyester that is produced and molded by a normal polymerization method and a solid phase polymerization method, is preferably composed mainly of polyethylene terephthalate, and may contain other polyester components and copolymerization components. This may also be made to contain catalyst(s) in the form of antimony, germanium, titanium, and/or other such metal compounds, and/or stabilizer(s) in the form of phosphorous compound(s) and/or the like. It is often the case that polyester for PET bottles will ordinarily employ catalyst in the form of germanium, and where PET bottle reconstituted raw material is employed and this is made into a film, it will be the case that germanium will be present within the film in an amount that is 1 ppm or more. However, the content of germanium is the content of the catalyst to the last, and is thus usually 100 ppm or less at most, and is usually 50 ppm or less.

Below, description is given with respect to mechanically recycled polyester resins and chemically recycled polyester resins.

[Mechanically recycled polyester resin]

The collected used recyclable PET bottles are sorted so as not to be mixed with other materials and garbage, labels and the like are removed from the PET bottles, and then the PET bottles are crushed into flakes. It is often the case that foreign matter adheres to and is mixed within such flakes. Furthermore, one can also imagine situations in which PET bottles used by consumers were filled with reagents, solvents, and/or other such chemical substances and used. For example, one can imagine that there might be detergents for kitchen utensils or the like, pesticides, herbicides, or agricultural chemicals, or any of various types of oils or the like. Because chemical substances adhering to surfaces of PET bottles cannot be adequately removed by ordinary cleaning, it is preferred that alkali cleaning be carried out. As alkali metal hydroxide solution for use during such a cleaning operation, sodium hydroxide solution or potassium hydroxide solution is used. At such a cleaning operation, precleaning may be carried out before carrying out alkali cleaning.

When alkaline cleaning is not performed, the chemical substances remain in the raw material resin as a foreign substance, thus these are mixed in and cause breakage during film formation, and this decreases the productivity, as well as the chemical substances remain in the film as a foreign substance and may cause the appearance of the film and printing omissions in the printing step performed later.

The concentration of the aqueous solution of an alkali metal hydroxide used in the cleaning step depends on the temperature, time, and stirring state but is usually in a range of 1 to 10% by weight. The time required for cleaning is in a range of 10 to 100 minutes, and it is preferable to perform the cleaning while performing stirring in order to enhance the effect.

It is preferable to perform rinsing and drying subsequently to the alkaline cleaning. Alkali cleaning and/or rinsing/cleaning may be repeated multiple times. When the aqueous solution components of an alkali metal hydroxide used for cleaning in the alkaline cleaning step remains in the flakes, these components may affect the physical properties of the film finally obtained through the melt extrusion step in the subsequent pellet granulation step and the melt extrusion step at the time of film formation.

It is preferred that the concentrations of sodium and potassium within the film that is ultimately obtained through use of such polyester resins employing recycled PET bottles be greater than 0 ppm and 150 ppm or less, more preferred that this be 3 ppm to 120 ppm, and still more preferred that this be 5 ppm to 80 ppm. It is not preferable that the concentration of sodium or potassium contained in the film is higher than 150 ppm since the heat resistance and thermal stability of the film decrease or the film is colored. It is not preferable that sodium or potassium is not contained at all since the effect of suppressing the production of diethylene glycol is diminished. Furthermore, as there are situations in which polyester resins employing recycled PET bottles contain small amounts of such components, complete elimination thereof would be difficult.

In such a cleaning step, a part of the PET bottle flakes is hydrolyzed by the aqueous solution of an alkali metal hydroxide. Furthermore, heating during forming of PET bottles causes reduction in the degree of polymerization of the resin. Moreover, application of heat and moisture during remelting and pelletization following pulverization so as to permit reuse of recovered PET bottles can have the effect of lowering the degree of polymerization. The resin can be reused as it is, but cannot be reused as it is in some cases since the moldability, strength, transparency, heat resistance and the like are inferior depending on the used application when the degree of polymerization is decreased.

In such a case, in order to restore the decreased degree of polymerization, it is preferable to conduct solid phase polymerization of the flakes of PET bottles, which have been crushed and cleaned, or flakes, which have been melted and pelletized.

The solid phase polymerization step can be carried out by performing continuous solid phase polymerization of washed flakes or flakes, which have been melt-extruded and pelletized, in an inert gas such as nitrogen gas or noble gas at 180 to 245°C, preferably 200 to 240°C.

It is desirable that this be carried out such that flake or pellet conditions are adjusted so that conditions at the polyester resin employing recycled PET bottles ultimately are such that intrinsic viscosity is 0.55 dl/g to 0.90 dl/g, or more preferably 0.60 dl/g to 0.85 dl/g.

The step of pelletizing the flakes will be described. The flakes are melted, extruded, cooled and granulated using an extruder equipped with degassing and filtering means.

The melting step in the extruder can be carried out by performing melting and kneading at 260 to 300°C, preferably 265 to 295°C. It is necessary that the flakes obtained as a result of pulverization of PET bottles which are fed thereinto be adequately dried, drying being carried out at conditions such that this is 5 to 200, or preferably 10 ppm to 100 ppm, or more preferably 15 ppm to 50 ppm. Where flake moisture content is high, this will cause the hydrolysis reaction to proceed at the melt operation, lowering the intrinsic viscosity of the polyester resin that is obtained. As the degassing means, those having at least one vacuum vent in the melting zone of the resin are preferable.

The extruder preferably has a filter capable of filtering and removing solid foreign substances having a particle diameter of 25 $\mu$m or more, preferably 15 um or more, more preferably 10 $\mu$m or more in the molten resin as a filtering means.

The molten resin that has passed through the filter passes through a die, is cooled in water, and then is cut into pellets having a desired shape, and granulated.

[Chemically recycled polyester resin]

While there is no particular limitation with respect to the method of manufacturing chemically recycled polyester resins that may be employed in accordance with the present invention, these include, e.g., to give a specific example as described at JP-A-2000-169623, those in which following separation, pulverization, and cleaning of recovered used PET bottles to remove foreign matter therefrom, that which is obtained by causing decomposition and purification to proceed as far as PET resin raw material or intermediate raw material as a result of causing depolymerization thereof is polymerized to cause this to become new PET resin. Methods in which depolymerization is such that ethylene glycol (EG) is added, and, in the presence of a catalyst, this is made to return to as far as bis-2-hydroxyethyl terephthalate (BHET) which is an intermediate raw material during resin manufacture, and following purification thereof this is repolymerized to PET, and methods in which, as described at JP-A-2000-302707, repolymerization is carried out following production of terephthalic acid and ethylene glycol as a result of heat treatment in a nonaqueous organic solvent in the presence of a catalyst in which iron is an essential component and polyethylene terephthalate is oxidized, may be cited as examples.

Because it is characteristic of chemically recycled polyester resins that whereas foreign matter and foreign substances are removed between depolymerization and repolymerization, and reconstitution thereof into a polyester resin that is of high quality equivalent in grade to that of virgin resin is permitted thereby, and because the hygienic properties thereof are superior to those of the aforementioned mechanically recycled polyester resins, these may in particular be favorably used in food packaging applications.

Bales of used PET bottles that have been compressed and reduced in volume serve as starting material for chemically recycled polyester resins used in accordance with the present invention. Such bales of PET bottles may be manufactured in accordance with known methods currently being utilized by municipalities. Other polyethylene terephthalate waste material or PET bottle flakes may serve instead of bales of PET bottles as a starting material

Bales of PET bottles obtained as a result of compression and reduction in volume of PET bottle waste material are fed into a grinder, warm water or water of normal temperature, or warm water or water of normal temperature which contains detergent, is injected thereinto, and pulverization is carried out in water.

Next, the mixture of liquid detergent and PET bottle flakes that is discharged from the grinder is immediately thereafter made to undergo processing for separation based on specific gravity, as a result of which metal, stone, glass, sand, and flakes are separated therefrom. Next, the flakes and liquid detergent are separated, and the flakes are washed with deionized water and made to undergo centrifugal dewatering.

The crude polyethylene terephthalate flakes obtained from the foregoing pretreatment operation are depolymerized and melted, and are simultaneously hydrolyzed and made into a polyethylene terephthalate melt having a low degree of polymerization, and an excess amount of ethylene glycol is used to carry out depolymerization to obtain a two-species solution containing a mixture of crude BHET and crude ethylene glycol.

Following completion of the depolymerization reaction, the temperature of the two-species solution containing the mixture of crude BHET and crude ethylene glycol is decreased, and this is filtered to remove high-melting-point sediment in the form of unreacted linear and cyclic oligomers, coagulated residue of foreign plastics other than polyethylene terephthalate, metal, and other such solid foreign matter, and this is then made to undergo adsorption/ion exchange treatment, removal of dissolved ions and colored substances being carried out to remove any foreign matter present within the crude BHET.

The two-species solution containing the mixture of crude BHET and crude ethylene glycol obtained by way of the foregoing prepurification operation is made to undergo a distillation/vaporization procedure, causing the ethylene glycol to be separated and distilled therefrom, to obtain concentrated BHET, or the two-species solution containing the mixture is cooled to 10°C or less to cause crystallization of BHET, following which the ethylene glycol and BHET are subjected to solid-liquid separation to obtain concentrated BHET, this concentrated BHET being subjected to vacuum evaporation such that temperature is more than 190°C and 250°C or less and such that residence time of the concentrated BHET within the evaporator is 10 minutes or less, to obtain purified bis-β-hydroxyethyl terephthalate.

After the foregoing has been carried out and purified BHET of high purity has been obtained, this purified BHET is loaded into a melt polycondensation reaction vessel to obtain polyethylene terephthalate polymer of high purity.

[Polyester resin composition]

A biaxially oriented polyester film in accordance with the present invention comprises a polyester resin composition that contains the following polyester resin(s) as primary constituent thereof.

The polyester resin that makes up a biaxially oriented polyester film in accordance with the present invention is a polymer that may be synthesized from dicarboxylic acid or an ester-forming derivative thereof, and a diol or an ester-forming derivative thereof. Examples thereof include polyethylene terephthalate, polybutylene terephthalate, and polyethylene-2,6-naphthalate, and polyethylene terephthalate is preferable from the viewpoint of mechanical characteristics, heat resistance, cost and the like.

Where "primary constituent" is said here, this means that fractional content within the polyester resin composition is 80% by weight or more, preferably that this is 90% by weight or more, more preferably that this is 95% by weight or more, and most preferably that this is 98% by weight or more.

Furthermore, so long as it does not impair the object of the present invention, other component(s) may be copolymerized within such polyester resin(s). More specifically, as copolymerized components, dicarboxylic acid components that may be cited as examples thereof include isophthalic acid, naphthalenedicarboxylic acid, 4,4-biphenyldicarboxylic acid, adipic acid, sebacic acid, ester-forming derivatives thereof, and so forth. Examples of the diol component include diethylene glycol, hexamethylene glycol, neopentyl glycol, and cyclohexanedimethanol. Furthermore, polyethylene glycol, polypropylene glycol, and other such polyoxyalkylene glycols may also be cited as examples. It is preferred that the copolymerized amount thereof be within 10 mol% of the repeating units of which this is made up, more preferred that this be within 5 mol%, and most preferred that this be 3 mol% or less.

Among the polyester resins that may make up biaxially oriented polyester films in accordance with the present invention, besides mechanically recycled polyester resins and chemically recycled polyester resins, as methods for manufacturing polyester resins derived from fossil fuels, methods in which the aforementioned dicarboxylic acid or an ester-forming derivative thereof and a diol or an ester-forming derivative thereof serving as primary starting materials are first, in accordance with ordinary methods, made to undergo an esterification and/or transesterification reaction, following which this is further made to undergo a polycondensation reaction under high temperature/vacuum conditions to carry out manufacture thereof, and so forth may be cited as examples.

The intrinsic viscosity of the polyester resin constituting the biaxially oriented polyester film of the present invention is preferably in a range of 0.50 to 0.90 dl/g, more preferably in a range of 0.55 to 0.80 dl/g from the viewpoint of film formability and recycling properties.

It is preferred that the polyester resin composition of the present invention contain at least one type of particle selected from the group consisting of inorganic particles, organic particles, and particles consisting of a mixture thereof.

As inorganic particles that may be used, particles consisting of silica (silicon oxide), alumina (aluminum oxide), titanium dioxide, calcium carbonate, kaolin, crystalline glass filler, kaolin, talc, alumina, silicaalumina composite oxide particles, and barium sulfate may be cited as examples. Examples of the organic particles include acrylic resin particles, melamine resin particles, silicone resin particles, and particles formed of crosslinked polystyrene. Thereamong, particles consisting of silica (silicon oxide), calcium carbonate, and/or alumina (aluminum oxide), or particles consisting of polymethacrylate, polymethyl acrylate, and/or derivative(s) thereof, are preferred, and particles consisting of silica (silicon oxide) and/or calcium carbonate are more preferred, thereamong silica (silicon oxide) being particularly preferred due to the fact that it will cause haze to be reduced.

Weight average particle diameter of particles in the context of the present invention is the value as measured using a Coul counter. It is preferred that the weight average particle diameter of particles be 0.5 $\mu$m to 4.0 $\mu$m, more preferred that this be 0.8 um to 3.8 $\mu$m, and still more preferred that this be 1.5 um to 3.0 um. When the weight average particle diameter of the particles is below 0.5 $\mu$m, formation of surface irregularities will be insufficient, there will be a tendency for lubricity of the film to be reduced and for purging of air entrained therebetween when this is being wound up into a roll to be nonuniform, causing occurrence of poor external appearance in the form of wrinkling and pock marks over bubbles, and there will be a tendency for ability to be wound up into a roll to deteriorate. When the weight average particle diameter of the particles exceeds 4.0 $\mu$m, there will be a tendency for quality of the film to be impaired inasmuch as there will be occurrence of printing defects and so forth due to formation of coarse projections.

The polyester resin composition in the present invention may contain a small amount of other polymers, antioxidants, heat stabilizers, anti-static agents, ultraviolet absorbers, plasticizers, pigments or other additives and the like as long as the object of the present invention is not impaired.

The upper limit of the intrinsic viscosity of the polyester resin employing recycled PET bottles is preferably 0.90 dl/g, more preferably 0.80 dl/g, still more preferably 0.75 dl/g, particularly preferably 0.69 dl/g. It is not so preferable that the intrinsic viscosity exceeds 0.90 dl/g since it is difficult to discharge the resin from the extruder and the productivity decreases in some cases.

It is preferred that in the biaxially oriented polyester film in accordance with the present invention, the lower limit of the content rate of polyester resin employing recycled PET bottles with respect to the total amount of polyester resin making up the film be 50% by weight, more preferred that this be 70% by weight, still more preferred that this be 90% by mass, and particularly preferred that this be 100% by weight. When the content rate is less than 50% by weight, the content rate is poor in terms of utilization of recycled resin and it is not so preferable in terms of contribution to environmental protection. The mechanically recycled polyester resin contains an isophthalic acid component, as described below, and exerts flexibility. As the amount of isophthalic acid component derived from the polyester resin employing recycled PET bottles decreases, there is a possibility that flexibility, which is advantageous for inorganic thin film layer lamination, may not be exerted. Polyester resin employing recycled PET bottles may be used as a master batch (a resin contained at a high concentration) employed when a lubricant such as inorganic particles and additives are added to improve the functions as a film.

In the present invention, it has been discovered that the crystal structure of polyester collapses and this contributes to the flexibility of the substrate film by containing isophthalic acid in the polyester resin used in the film, and it is possible to create a surface on which an inorganic thin film can be easily laminated by controlling the amount of isophthalic acid. Examples of the means to adjust the amount of isophthalic acid includes changing the amount of mechanically recycled polyester resin used in the film. Usually, the crystallinity of polyester used for PET bottles is controlled in order to improve the appearance of bottles, and as a result, polyester containing an isophthalic acid component at 10 mol% or less is used. Therefore, a mechanically recycled polyester resin also contains an isophthalic acid component.

In the present invention, it is important to control the amount of the isophthalic acid component in the total dicarboxylic acid components constituting the polyester resin contained in the substrate film for imparting flexibility to exert barrier performance. The lower limit is preferably 0.5 mol%, more preferably 0.7 mol%, still more preferably 0.9 mol%, particularly preferably 1.0 mol%. When the isophthalic acid content is less than 0.5 mol%, the surface flexibility decreases, stress load is likely to be applied to the inorganic thin film layer when an inorganic thin film layer is laminated, and the barrier performance may deteriorate. The upper limit of the amount of the isophthalic acid component is preferably 5.0 mol%, more preferably 4.0 mol%, still more preferably 3.5 mol%, particularly preferably 3.0 mol%. When the amount exceeds 5.0 mol%, crystallinity decreases, whereby the heat shrinkage rate may increase, which is not so preferable. When the substrate becomes too soft, the inorganic thin film cannot follow the changes and the barrier performance may deteriorate. By setting the content rate of the isophthalic acid component within the above range, a surface on which an inorganic thin film layer is easily deposited is created by the substrate surface softening effect while the original properties of the substrate are maintained, and as a result, favorable barrier properties can be exerted.

In the present invention, it is preferable to use a chemically recycled polyester resin excellent in hygiene properties and a mechanically recycled resin excellent in flexibility in combination. The lower limit of the content rate of the chemically recycled polyester resin with respect to the total amount of recycled polyester resins constituting the film is preferably 5% by weight, more preferably 10% by weight, still more preferably 15% by mass. The lower limit is particularly preferably 20% by weight. It is not so preferable that the content rate of the chemically recycled polyester resin is less than 5% by weight from the viewpoint of the hygiene properties of the film. Meanwhile, the upper limit of the content rate of the chemically recycled polyester resin is preferably 80% by weight, more preferably 75% by weight, still more preferably 70% by mass. The upper limit is particularly preferably 65% by weight. When the content rate of the chemically recycled polyester resin is greater than 80% by weight, the content rate of the mechanically recycled resin is relatively small, and the amount of the above-mentioned isophthalic acid component may decrease. As a result, the flexibility of the film surface may decrease and the barrier performance may deteriorate.

[Biaxially oriented polyester film and film roll production method]

Biaxially oriented polyester film in accordance with the present invention may for example be obtained by causing chips of the polyester resin employing recycled PET bottles, and chips of a polyester resin composition that contains polyester resin as primary constituent thereof, to be supplied to and mixed in an extruder which is equipped with a hopper, causing this to be melt extruded by the extruder to form an un-stretched sheet, and carrying out stretching of that un-stretched PET sheet.

Although preferred examples are described below, it should be understood that there is no limitation with respect thereto.

A biaxially oriented polyester film in accordance with the present invention may have a laminated structure in which there is a single layer, or in which there are two layers, three layers, or four or more layers. Where the structure is such that there are two or more layers, while the constituent components of each layer will be the polyester-type resin, and the inorganic particles, and furthermore the resin(s) other than the polyester-type resin that are as described above, the types and amounts of constituent components contained therein will be different for each of the respective mutually adjacent layers.

Where the structure is such that there is a single layer, surface layer (A) in accordance with the present invention will be the entire biaxially oriented polyester film.

Where the structure is such that there are two layers, surface layer (A) in accordance with the present invention will be either one or both of the layers. Where the structure is such that there are three layers, surface layer (A) in accordance with the present invention will be the layer(s) at either one or both sides thereof.

Where the structure is such that there are three layers, when the compositions making up the film are represented by A, A', B, and C, then whereas it will be possible, for example, for constitutions in the form of A/B/C, A/B/A, and A/B/A' to be assumed, in situations where there is no particular need to vary the surface properties at the two faces, a constitution in the form of A/B/A, for which the design is such that the layers at either side have the same composition, is preferred, as it may be easily manufactured. Here, A and A' indicate compositions that are not identical.

In particular, when the structure is such that there are three layers, even where there are no inorganic particles present at base layer (B), as it will be possible to control the surface roughness of the film by controlling the amount of particles added to surface layer (A) only, permitting a smaller amount of inorganic particles to be contained within the film, this is preferred. This is also so as to be able to contribute to improvement of the situation whereby aroma retention might otherwise be reduced due to escape of olfactory components by way of voids (spaces) that tend to arise at boundaries between polyester resin and inorganic particles.

Moreover, to the extent that doing so would not adversely affect properties at the film surface, causing raw material recovered from edge portions produced during the film forming operation, and/or other raw material or the like recycled from the film forming operation, to be mixed within and used at base layer (B) at appropriate time(s) will be easy and will also be superior in terms of cost.

As described above, in the case of adopting a film configuration of two-layer structure or more, it is also possible to laminate chemically recycled polyester resin and mechanically recycled polyester resin as separate layers. For example, in the case of a three-layer configuration of A/B/A, by disposing chemically recycled polyester resin as layer A, the outermost layer, and disposing mechanically recycled polyester resin as layer B, the center layer, the chemically recycled polyester resin containing less impurities exists in the surface layer and this makes it possible to reduce defects in the film. Meanwhile, contrary to the above, by disposing mechanically recycled polyester resin as layer A, the outermost layer, and disposing chemically recycled polyester resin as layer B, the center layer, the mechanically recycled polyester resin having a high content of isophthalic acid exists on the surface layer side, thus a surface on which an inorganic thin film layer is easily deposited is created by the substrate surface softening effect, and favorable barrier properties can be exerted.

The lower limit of the content of particles in surface layer (A) in the biaxially oriented polyester film in accordance with the present invention is 500 ppm weight, 600 ppm weight being more preferred, and 700 ppm mass being particularly preferred. When the content of particles is less than 500 ppm weight, this is not so preferred since there are situations in which this would cause reduction in lubricity of the film surface and winding properties.

It is preferred that the total amount of inorganic particles contained within all layers of a biaxially oriented polyester film in accordance with the present invention be 100 ppm or more and 1000 ppm or less, and more preferred that this be 800 ppm or less. When inorganic particle content is less than 100 ppm, this will tend to cause lubricity to decrease, leading to occurrence of trouble when carrying out winding, rewinding, slitting, or the like or during travel of the roll during the course of film manufacturing operations, and will tend to cause production of scratches at the film surface, occurrence of wrinkles in the roll, and/or generation of static electricity. When inorganic particle content exceeds 1000 ppm, caution should be exercised, since there will be a tendency for maximum protrusion height Sp and arithmetic mean height Sa at the film surface to become too high. Furthermore, there will be a tendency for voids within the film to increase, which can cause decrease in transparency.

When the polyester resin employing recycled PET bottles and the polyester resin composition are melt extruded, it is preferred that a hopper dryer, paddle dryer, or other such dryer or vacuum dryer be used to carry out drying thereof. The polyester resin employing recycled PET bottles and the polyester resin composition are dried in this way, then melted at a temperature that is equal to or higher than the melting point of the polyester resin and is 200°C to 300°C, and extruded into a film using an extruder. Alternatively, the polyester resin, particles, and, where necessary, additives may be sent thereto by different extruders, and after these are combined, may be mixed and melted, and extruded in sheet-like fashion.

When extruding the molten resin composition, this may be carried out by adopting the T die method, tubular method, and/or any other such known method as desired.

Thereafter, an un-stretched sheet can be obtained by rapidly cooling the sheet-shaped molten polyester resin after extrusion. As method for quenching the molten polyester resin, a method in which the molten polyester resin from the orifice fixture is cast onto a rotating drum where it is quenched and allowed to solidify to obtain a substantially unoriented resin sheet might be favorably adopted. The temperature of the rotating drum is preferably set to 40°C or less.

Moreover, as a result of causing the un-stretched sheet that is obtained to undergo a combination of operations such as the following biaxial stretching operation in which stretching is carried out in the machine direction and in the transverse direction, heat setting operation, thermal relaxation operation, and so forth, it is possible to obtain a biaxially oriented polyester film in accordance with the present invention.

This will be described in detail below. The machine direction means the direction in which the un-stretched sheet travels, and the transverse direction means the direction perpendicular to the machine direction.

The stretching method can be simultaneous biaxial stretching in which stretching in the machine direction and stretching in the transverse direction are performed at the same time or sequential biaxial stretching in which stretching in either of the machine direction or the transverse direction is first performed, but sequential biaxial stretching is most preferable from the viewpoint of high film forming speed and high productivity and the viewpoint of excellent thickness uniformity of the finally obtained biaxially oriented polyester film.

The film forming speed here means the traveling speed (m/min) of the biaxially oriented polyester film when wound into a master roll after the stretching step.

It is preferred that the temperature during stretching of an un-stretched sheet in the machine direction be in the range of 80°C to 130°C and the stretching ratio be in the range of 3.3 to 4.7 times.

It is preferred that the temperature during stretching is 80°C or more and the stretching ratio is 4.7 times or less since the shrinkage stress in the machine direction is reduced, the bowing phenomenon is reduced, and variations and distortion in molecular orientation property and heat shrinkage rate in the transverse direction of the obtained biaxially oriented polyester film decrease.

In the case of stretching an un-stretched sheet in the machine direction, from the perspective of the scale of production equipment, production cost, and scratches such as adhesive scratches and transfer scratches caused by rolls, a method in which the un-stretched sheet is heated using an infrared heater or the like and stretched is preferred to a method in which the un-stretched sheet is stretched in multiple stages between a plurality of rolls since it is easy to obtain high temperatures, it is also easy to perform local heating, and scratches caused by rolls can be reduced.

After the film obtained by stretching the un-stretched sheet in the machine direction has been subjected to surface treatment such as corona treatment and plasma treatment, if necessary, a resin dispersion or a resin solution can be applied to at least one surface of the film in order to impart functions such as easy slipperiness, easy adhesive property, and antistatic property.

In a case where the film obtained by stretching the un-stretched sheet in the machine direction is stretched in the transverse direction, the film can be stretched in the transverse direction by guiding the film to a tenter apparatus, holding both ends of the film obtained by stretching the un-stretched sheet in the machine direction with clips, heating the film to a predetermined temperature with hot air, and then increasing the distance between the clips while transporting the film in the machine direction.

In the biaxially oriented polyester film of the present invention, the thermodynamic crystallization temperature of polyester resin employing recycled PET bottles with respect to the total amount of polyester resin making up the film is usually about 130°C, and thus the polyester resin is likely to fracture during stretching at stretching temperatures higher than 130°C. When the stretching temperature is lowered in order to suppress fracture during stretching, a difference in stretching stress in the machine direction generated by stretching in the transverse direction is likely to occur between the ends held by clips and the central portion where the constraint force is relatively small, the bowing phenomenon caused by non-uniformity of physical properties in the film transverse direction occurs, and variations and distortion in molecular orientation property and heat shrinkage rate in the film transverse direction are likely to occur.

In order to improve such non-uniformity of physical properties in the transverse direction of the film caused by fracture during stretching and bowing phenomenon, in the present invention, it is preferred that stretching in the machine direction be performed, then stretching in the transverse direction be performed in a tenter, and a cooling region be provided before the heat setting treatment region in the biaxial stretching step. The cooling region before the heat setting treatment region refers to a cooling step in which the temperature of the film stretched in the transverse direction is lowered after stretching in the transverse direction in the tenter, by, for example, a method in which hot air in the heating region is blocked with a shielding plate such as an aluminum plate inside the tenter in front of the heat setting treatment region, and a method in which hot air is blocked and then compressed air or the like is further sent actively.

The temperature of the film in the cooling region is preferably set to be equal to or lower than the glass transition temperature (Tg) of the film. When stretching in the transverse direction is performed in a tenter, since the constraint force at the central portion is relatively smaller compared to that at the ends held by clips, deformation due to the stretching stress in the machine direction generated by stretching in the transverse direction and shrinkage stress in the machine direction generated by heat setting treatment becomes greater and the bowing phenomenon is likely to increase. It is preferable to cool the film to a temperature equal to or lower than the glass transition temperature since the rigidity of the film is enhanced, deformation of the film is suppressed, and variations and distortion in molecular orientation property and heat shrinkage rate in the film transverse direction caused by the bowing phenomenon decrease.

The temperature in the cooling region is preferably 60°C or more. It is preferable to cool the film to a temperature of 55°C or more since the heat shrinkage rates in the machine direction and transverse direction of the film can be suppressed.

The preheating temperature during stretching in the transverse direction is preferably in the range of 100°C to 130°C. It is preferred that the preheating temperature during stretching is 100°C or more since the shrinkage stress generated during stretching in the machine direction is reduced, the bowing phenomenon is reduced, and variations and distortion in molecular orientation property and heat shrinkage rate in the transverse direction of the obtained biaxially oriented polyester film decrease.

The temperature during stretching in the transverse direction is preferably in the range of 105°C to 135°C. It is preferred that the temperature during stretching is 105°C or more since the stretching stress in the machine direction generated by stretching in the transverse direction is reduced and the bowing phenomenon is less likely to increase. It is preferred that the temperature during stretching is 135°C or less since fracture is less likely to occur during stretching in the case of using polyester resin employing recycled PET bottles, of which the thermodynamic crystallization temperature is about 130°C as well.

The stretching ratio in the transverse direction is preferably in the range of 3.5 to 5.0 times. It is preferred that the stretching ratio in the transverse direction be 3.5 times or more since it is easy to obtain a high yield in terms of material balance, and the mechanical strength does not decrease as well as the thickness unevenness in the transverse direction is less likely to increase.

It is preferred that the stretching ratio in the transverse direction be 5.0 times or less since fracture is less likely to occur during stretching and film formation.

A heat setting treatment step is performed subsequently to the step of biaxial stretching in the machine direction and transverse direction, and the heat setting temperature of the film obtained by stretching an un-stretched sheet in the machine direction and stretching the obtained film in the transverse direction is preferably 220°C or more and 250°C or less.

It is preferred that the heat setting temperature be 220°C or more since the heat shrinkage rate is not too high in both the machine direction and the transverse direction, and thermal dimensional stability during secondary processing is favorable.

Meanwhile, it is preferred that the heat setting temperature be 250°C or less since bowing is less likely to increase, and variations and distortion in molecular orientation property and heat shrinkage rate in the film transverse direction decrease.

The heat relaxation treatment step is further performed, but the heat relaxation treatment step may be performed separately from the heat setting step after the heat setting step has been performed or may be performed at the same time as the heat setting step. The relaxation rate in the film transverse direction in the heat relaxation treatment step is preferably 4% or more and 8% or less.

When the percent relaxation is 4% or more, this is preferred, because thermal shrinkage will not be too high in the transverse direction of the biaxially oriented polyester film that is obtained, and dimensional stability during secondary treatment will be satisfactory.

It is preferred that the percent relaxation is 8% or less since the stretching stress in the machine direction generated by stretching in the transverse direction of the central portion of the film in the transverse direction is not too great and the bowing phenomenon is less likely to increase.

In the thermal relaxation treatment step, the film is in a situation to be significantly likely to fluctuate up and down since the constraint force in the transverse direction may decrease and the film may loosen by its own weight until the film obtained by stretching an un-stretched sheet in the machine direction and stretching the film in the transverse direction is shrunk by thermal relaxation and the film may swell by the accompanying airflow of hot air blown from the nozzles installed above and below the film, and the amount of change in the orientation angle of the obtained biaxially oriented polyester film is likely to fluctuate greatly. Examples of the method for diminishing these include keeping the film parallel by adjusting the wind speed of hot air blown from the upper and lower nozzles.

Moreover, so long as it does not impair the object of the present invention, a biaxially oriented polyester film in accordance with the present invention may be made to undergo corona discharge treatment, glow discharge treatment, flame treatment, and/or surface roughening treatment, and/or may be made to undergo publicly known anchor coat treatment, printing, ornamentation, and/or the like.

The wide biaxially oriented polyester film which has been stretched and formed by the methods described above is wound using a winder apparatus to fabricate a master roll. It is preferred that width of the master roll be 5000 mm or more and 10000 mm or less. It is preferred that the width of the roll is 5000 mm or more since the cost per unit area of the film is low during the slitting step, vapor deposition, printing, and/or other such secondary processing that follow.

The winding length of the master roll is preferably 10,000 m or more and 100,000 mm or less. When the wound length of the roll is 5000 m or more, as the cost per unit area of the film during the slitting operation, vapor deposition treatment, printing treatment, and/or other such secondary processing that follows will be low, this is preferred.

Furthermore, it is preferred that the width of film rolls produced by slitting from the master roll be 400 mm or more and 3000 mm or less. When roll width is 400 mm or more, as there will be less inconvenience in terms of the frequent changing of film rolls that would otherwise need to be performed during the printing operation, this is preferred from the standpoint of cost. Furthermore, while it is preferred that roll width be large, when this is 3000 mm or less, as not only will roll width not be excessively large, but roll weight will also not be excessively large, and there will be no worsening of handling characteristics, this is preferred.

It is preferred that wound length of film rolls be 2000 m or more and 65000 m or less. When wound length is 2000 m or more, as there will be less inconvenience in terms of the frequent changing of film rolls that would otherwise need to be performed during the printing operation, this is preferred from the standpoint of cost. It is more preferable as the winding length is longer, but it is preferable that the winding length is 65,000 m or less since the roll diameter does not increase too large, the roll weight does not increase too heavy, and the handleability does not decrease.

While there is no particular limitation with respect to the roll core employed in the film roll, this is ordinarily of 3-inch (37.6-mm), 6-inch (152.2-mm), 8-inch (203.2-mm) diameter or other such size and made of plastic or made of metal, or a cylindrical roll core made of a cardboard tube may be used.

The lower limit of the heat shrinkage rate of the substrate film in the present invention in the machine direction (sometimes described as MD) and transverse direction (sometimes described as TD) by the treatment at 150°C for 30 minutes is preferably 0.1%, more preferably 0.3%. When the heat shrinkage rate is less than 0.1%, the improvement effect may be saturated, and the film may become mechanically brittle, which is not preferable. The upper limit is preferably 3.0%, more preferably 2.5%. When the heat shrinkage rate exceeds 3.0%, pitch deviation and the like may occur due to dimensional change during processing such as printing, which is not preferable. When the heat shrinkage rate exceeds 3.0%, shrinkage in a transverse direction, and the like may occur due to dimensional change during processing such as printing, which is not preferable.

The thickness of the substrate film in the present invention is preferably 5 to 40 μm. When this is 5 μm or more, as there will not be reduction in the stiffness or strength of the film, and there will tend not to be generation of wrinkles at the film roll when this is being wound up into a roll by a winder apparatus, this is preferred. On the other hand, within the range for which film thickness is 40 μm or less, it will be possible to obtain adequate strength and stiffness, and the decreased thickness will be preferred from the standpoint of cost. The film thickness is more preferably 8 to 30 $\mu$m, particularly preferably 9 $\mu$m to 20 $\mu$m.

The thermodynamic crystallization temperature of the substrate film in the present invention is preferably 139°C or less, more preferably 135°C or less. Since the thermodynamic crystallization temperature of polyester resin employing recycled PET bottles is usually about 130°C and is lower than the thermodynamic crystallization temperature of polyester resin derived from fossil fuels, it is not so preferred that the thermodynamic crystallization temperature in the film is higher than 139°C since it is difficult to produce a polyester film containing recycled resin at a high ratio as a result.

[Inorganic thin film layer]

The gas barrier laminated film of the present invention has an inorganic thin film layer on the surface of the substrate film layer. The inorganic thin film layer is a thin film formed of a metal or an inorganic oxide. The material for forming the inorganic thin film layer is not particularly limited as long as the material can be formed into a thin film. From the viewpoint of gas barrier properties, preferable examples thereof include inorganic oxides such as silicon oxide (silica), aluminum oxide (alumina), and a mixture of silicon oxide and aluminum oxide. In this composite oxide, with regard to the mixing ratio of silicon oxide to aluminum oxide, the metal mass ratio of Al is preferably in a range of 20% to 70% by mass. When the Al concentration is less than 20% by mass, the water vapor barrier properties may decrease. Meanwhile, when the Al concentration is more than 70% by mass, the inorganic thin film layer tends to be hard, the film may be broken during secondary processing such as printing and lamination, and the gas barrier properties may decrease. When the Al concentration is 100% by mass, the water vapor barrier performance is favorable, but the inorganic thin film layer is formed of a single material, so the surface of the inorganic thin film layer tends to be smooth, the inorganic thin film layer has poor slipperiness, and defects (wrinkles/acnes and the like) in processing are likely to be generated. The silicon oxide used herein is various silicon oxides such as SiO and SiOz or a mixture thereof, and the aluminum oxide used herein is various aluminum oxides such as AlO and $Al_2O_3$ or a mixture thereof.

The thickness of the inorganic thin film layer is usually 1 to 100 nm, preferably 5 to 50 nm. When the thickness of the inorganic thin film layer is less than 1 nm, it may be difficult to obtain satisfactory gas barrier properties. On the other hand, when the thickness is more than 100 nm and is excessively thick, the effect of improving the gas barrier properties corresponding to the excessive thickness is not obtained, and it is rather disadvantageous from the viewpoint of flex resistance and production cost.

The method for forming the inorganic thin film layer is not particularly limited, and known vapor deposition methods, for example, physical vapor deposition methods (PVD methods) such as a vacuum vapor deposition method, a sputtering method, and an ion plating method, or chemical vapor deposition methods (CVD methods) may be appropriately adopted. Hereinafter, a typical method for forming the inorganic thin film layer will be described by taking a silicon oxide/aluminum oxide-based thin film as an example. For example, in the case of adopting the vacuum vapor deposition method, a mixture of SiOz and $Al_2O_3$, a mixture of $SiO_2$ and Al, or the like is preferably used as a vapor deposition raw material. Usually, particles are used as these vapor deposition raw materials. In this case, the size of each particle is desirably a size that does not change the pressure during vapor deposition, and the preferable particle diameter is 1 mm to 5 mm. For heating, systems such as resistive heating, high frequency induction heating, electron beam heating, and laser heating can be adopted. It is also possible to adopt reactive vapor deposition by introducing oxygen, nitrogen, hydrogen, argon, carbon dioxide gas, water vapor or the like as a reaction gas or using a means such as ozone addition or ion assist. The film forming conditions can also be arbitrarily changed so that a bias is applied to the body to be vapor-deposited (laminated film to be subjected to vapor deposition) or the body to be vapor-deposited is heated or cooled. The vapor deposition materials, the reaction gases, the application of a bias to the body to be vapor-deposited, the heating/cooling, and the like can be similarly changed in the case of adopting a sputtering method and a CVD method as well.

In the present invention, surface hardness (flexibility) is controlled by the isophthalic acid content in the substrate film. By setting the surface hardness within a predetermined range, the inorganic thin film layer is easily deposited on the substrate by its flexibility, and a coating film excellent in barrier performance can be obtained. The surface hardness is preferably 60 to 120 N/mm$^2$. The surface hardness is more preferably 65 N/mm$^2$ or more, still more preferably 70 N/mm$^2$ or more, particularly preferably 75 N/mm$^2$ or more, and is more preferably 115 N/mm$^2$ or less, still more preferably 110 N/mm$^2$ or less, particularly preferably 105 N/mm$^2$ or less. When the surface hardness of the laminated film exceeds 120 N/mm$^2$, the surface flexibility decreases, stress load is likely to be applied to the inorganic thin film layer when an inorganic thin film layer is laminated, and the barrier performance may deteriorate. On the other hand, when the surface hardness is less than 60 N/mm$^2$, the surface becomes too soft, the inorganic thin film cannot thus follow the changes, and the barrier performance may deteriorate. It is also not preferable from the viewpoint of processing suitability to be described later.

[Covering layer]

In the laminated film of the present invention, a covering layer can be provided between the substrate film layer and the inorganic thin film layer for the purpose of securing barrier properties and lamination strength after retorting and further slipperiness to improve processing suitability. Examples of the resin composition used for the covering layer to be provided between the substrate film layer and the inorganic thin film layer include a resin composition in which a curing agent such as an epoxybased curing agent, an isocyanate-based curing agent, a melamine-based curing agent, an oxazoline-based curing agent, or a carbodiimide-based curing agent is added to a resin such as a urethane-based resin, a polyester-based resin, an acryl-based resin, a titanium-based resin, an isocyanate-based resin, an imine-based resin, or a polybutadiene-based resin. These resin compositions used for the covering layer preferably contain a silane coupling agent having at least one or more organic functional groups. Examples of the organic functional groups include an alkoxy group, an amino group, an epoxy group, and an isocyanate group. By the addition of the silane coupling agent, the lamination strength after retorting is further improved.

Among the resin compositions used for the covering layer, it is preferable to use a resin containing an oxazoline group or a carbodiimide group, and it is more preferable to use a mixture of an acryl-based resin and a urethane-based resin in addition to these. These functional groups exhibit high affinity for the inorganic thin film, and can react with a metal hydroxide and an oxygen deficiency portion of an inorganic oxide that is generated during formation of the inorganic thin film layer, and thus firm close contact properties to the inorganic thin film layer are exhibited. The unreacted functional groups present in the covering layer can react with the carboxylic acid terminal generated by hydrolysis of the substrate film layer and the covering layer to form a crosslink.

In the present invention, the amount of the covering layer attached is preferably set to 0.010 to 0.200 (g/m$^2$). This makes it possible to uniformly control the covering layer, and as a result, the inorganic thin film layer can be densely deposited. Moreover, the cohesive force inside the covering layer is improved, the close contact properties between the respective layers of the substrate film-covering layer-inorganic thin film layer also increase, and thus the water resistant adhesive properties of the covering layer can be enhanced. The amount of the covering layer attached is preferably 0.015 (g/m$^2$) or more, more preferably 0.020 (g/m$^2$) or more, still more preferably 0.025 (g/m$^2$) or more, and is preferably 0.190 (g/m$^2$) or less, more preferably 0.180 (g/m$^2$) or less, still more preferably 0.170 (g/m$^2$) or less. When the amount of the covering layer attached is more than 0.200 (g/m$^2$), the cohesive force inside the covering layer becomes insufficient and favorable close contact properties may not be exerted. In addition, since the uniformity of the covering layer is also diminished, defects may be generated in the inorganic thin film layer and the gas barrier properties may decrease. Furthermore, when the covering layer is thick, the substrate softening effect is weakened, leading to deterioration of gas barrier properties. Moreover, the production cost increases and this is economically disadvantageous. On the other hand, when the film thickness of the covering layer is less than 0.010 (g/m$^2$), the substrate cannot be sufficiently covered and sufficient gas barrier properties and close contact properties between layers may not be obtained.

The method for forming the covering layer is not particularly limited, and, for example, conventionally known methods such as a coating method can be adopted. Examples of suitable methods among the coating methods include an off-line coating method and an in-line coating method. For example, in the case of an in-line coating method that is executed in a step of producing a substrate film layer, it is preferable to send the substrate film to a stretching step in the perpendicular direction immediately after coating and to perform drying in the preheating zone or a stretching zone in the stretching step although the conditions for drying and heat treatment during coating depend on the coating thickness or conditions for the apparatus. Normally, the temperature is preferably set to about 50°C to 250°C in such a case.

Examples of the solvating medium (solvent) used in the case of using a coating method include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

In the present invention, surface hardness (flexibility) is controlled by the isophthalic acid content in the substrate film. By setting the surface hardness within a predetermined range, the covering layer easily penetrates and deposits on the substrate by its flexibility, and as a result, a uniform coating film is obtained. The surface hardness of a film obtained by laminating a covering layer on a substrate film on the covering layer surface side is preferably 120 N/mm$^2$ or less. The surface hardness is preferably 115 N/mm$^2$ or less, more preferably 110 N/mm$^2$ or less, still more preferably 105 N/mm$^2$ or less. When the surface hardness of the laminated film exceeds 120 N/mm$^2$, the surface flexibility decreases and it is difficult to obtain the penetration effect of the covering layer. The lower limit of the surface hardness is preferably 60 N/mm$^2$, more preferably 65 N/mm$^2$, still more preferably 70 N/mm$^2$, particularly preferably 75 N/mm$^2$. In a laminated film in which an inorganic thin film layer described below is further laminated on the covering layer as well, the preferable range of the surface hardness on the inorganic thin film layer surface side is the same as the above range.

As mentioned above, by softening the surface hardness, improvement in barrier performance can be expected, but there is a concern that slipperiness deteriorates accordingly. When the slipperiness is poor, wrinkling may occur during winding in the vapor deposition, coating, and lamination steps, further small convex defects (pock marks) may occur as the film is caught during winding, or blocking may occur, which may cause troubles. In the present invention, by controlling the surface roughness of the laminated film, it is possible to impart appropriate slipperiness to the substrate surface as well as maintain the flexibility of the substrate, and as a result, a film excellent in processability can be obtained. The surface roughness of the film is preferably such that the average roughness Ra is 2.0 to 6.0 nm in a 2 um square region observed under an atomic force microscope (AFM). This imparts minute unevenness to the surface, and as a result, favorable slipperiness is obtained. The roughness is preferably 2.5 to 5.5 nm, more preferably 3.0 to 5.0 nm, still more preferably 3.5 to 4.5 nm. When the roughness exceeds 6 nm, the inorganic thin film layer may not be uniformly laminated because of the unevenness, and as a result, the gas barrier properties may deteriorate. On the other hand, when the roughness is less than 2 nm, the surface is flat and the slipperiness deteriorates.

Examples of methods for bringing the surface roughness within the above range include formation of a covering layer or surface treatment such as corona treatment. Among these, formation of a covering layer is preferable from the viewpoint of being able to impart water resistant adhesive properties and slipperiness at the same time. The roughness of the covering layer can be adjusted by changing the mixing ratio of two or more types of materials and changing the dispersibility of the resin, by changing the amount of the covering layer attached, or by changing the solvent used to dilute the coating liquid during preparation.

The coefficient of static friction $\mu$s and coefficient of dynamic friction $\mu$d of the inorganic thin film layer surface/covering layer surface of the laminated film according to the present invention are preferably within a range of 0.20 to 0.40. The coefficient of static friction $\mu$s and the coefficient of dynamic friction $\mu$d are more preferably 0.275 to 0.375, still more preferably 0.30 to 0.35. When the slipperiness of the laminated film exceeds 0.40, wrinkling may occur during film winding or pock marks may be caused. On the other hand, when the slipperiness is less than 0.20, the film may slip upwards and miswinding may be caused.

[Protective layer]

In the present invention, when gas barrier performance is further required or processing such as printing is required, a protective layer can also be provided on the inorganic thin film layer. The metal oxide layer is not a completely dense film and has dotted microscopic deficient portions. By applying a specific resin composition for protective layer to be described later onto the metal oxide layer to form a protective layer, a resin in the resin composition for protective layer invades the deficient moieties of the metal oxide layer, and as a result, an effect of stabilizing the gas barrier properties is obtained. Additionally, by using a material exhibiting gas barrier properties in the protective layer itself as well, the gas barrier performance of the laminated film can also be greatly improved. However, it should be noted that the provision of the protective layer causes a cost increase due to an increase in the number of steps, and burdens on the environment depending on the material used. It should also be noted that the protective layer changes the above-described surface roughness.

The amount of the protective layer attached is preferably 0.10 to 0.40 (g/m$^2$). This makes it possible to uniformly control the protective layer in coating, resulting in a film with less coating nonuniformity and defects. The cohesive force of the protective layer itself is improved, and the close contact properties between the inorganic thin film layer and the protective layer is also strengthened. The amount of the protective layer attached is preferably 0.13 (g/m$^2$) or more, more preferably 0.16 (g/m$^2$) or more, still more preferably 0.19 (g/m$^2$) or more, and is preferably 0.37 (g/m$^2$) or less, more preferably 0.34 (g/m$^2$) or less, still more preferably 0.31 (g/m$^2$) or less. When the amount of the protective layer attached is more than 0.400 (g/m$^2$), the gas barrier properties are improved, but a cohesive force inside the protective layer is insufficient, and the uniformity of the protective layer also decreases, and thus nonuniformity and defects may occur in the coating appearance, or the gas barrier properties and the adhesive properties may not be sufficiently exerted. Meanwhile, when the film thickness of the protective layer is less than 0.10 (g/m$^2$), sufficient gas barrier properties and close contact properties between layers may not be obtained.

Examples of the resin composition used for the protective layer to be formed on the surface of the inorganic thin film layer of the laminated film according to the present invention include a resin composition obtained by adding a curing agent such as an epoxy-based curing agent, an isocyanate-based curing agent, or a melamine-based curing agent to a resin such as a urethane-based resin, a polyester-based resin, an acryl-based resin, a titanium-based resin, an isocyanate-based resin, an imine-based resin, or a polybutadiene-based resin.

In particular, a urethane resin is preferably contained since, in addition to the barrier performance due to the high cohesiveness of the urethane bond itself, a polar group interacts with the inorganic thin film layer and exhibits flexibility due to the presence of an amorphous portion, and therefore damage to the inorganic thin film layer can be suppressed when a bending load is applied as well.

(Urethane resin)

The glass transition temperature (Tg) of the urethane resin used in the present invention is preferably 100°C or more, more preferably 110°C or more, and still more preferably 120°C or more from the viewpoint of improving barrier properties provided by a cohesive force. However, in order to develop an adhesive force, a flexible resin having excellent flexibility and a Tg of 100°C or less may be mixed for use. In that case, the addition ratio of the flexible resin is preferably within a range of 0 to 80%. The addition ratio is more preferably within a range of 10 to 70%, and still more preferably within a range of 20 to 60%. When the addition ratio is within the above range, both the cohesive force and the flexibility can be achieved, and the barrier properties and the close contact properties become favorable. When the addition ratio is more than 80%, the film may become too soft, leading to a decrease in the barrier performance.

As the urethane resin, it is more preferable to use a urethane resin containing an aromatic or aromatic-aliphatic diisocyanate component as a main constituent component from the viewpoint of improving the gas barrier properties.

Among these, it is particularly preferable to contain a meta-xylylene diisocyanate component. By using the resin, the cohesive force of the urethane bond can be further increased by the stacking effect between the aromatic rings, and as a result, favorable gas barrier properties are obtained.

In the present invention, the proportion of the aromatic or aromatic-aliphatic diisocyanate in the urethane resin is preferably set to be in a range of 50 mol% or more (50 to 100 mol%) in 100 mol% of polyisocyanate components (F). The proportion of the total amount of aromatic or aromatic-aliphatic diisocyanates is preferably 60 to 100 mol%, more preferably 70 to 100 mol%, still more preferably 80 to 100 mol%. As such a resin, the "TAKELAC (registered trademark) WPB" series commercially available from Mitsui Chemicals, Inc. can be suitably used. When the proportion of the total amount of aromatic or aromatic-aliphatic diisocyanates is less than 50 mol%, there is a possibility that favorable gas barrier properties are not obtained.

Various crosslinking agents silicon-based crosslinking agents may be blended in the urethane resin used in the present invention as long as the gas barrier properties are not impaired for the purpose of improving the cohesive force and moist heat resistant adhesive properties of the film. Examples of the crosslinking agent include a silicon-based crosslinking agent, an oxazoline compound, a carbodiimide compound, and an epoxy compound. Among these, by blending a silicon-based crosslinking agent, the water resistant adhesive properties to the inorganic thin film layer can be particularly improved. From the viewpoint, a silicon-based crosslinking agent is particularly preferable. In addition, an oxazoline compound, a carbodiimide compound, or an epoxy compound or the like may be used in combination as the crosslinking agent.

The coating method of the resin composition for protective layer is not particularly limited as long as it is a method for coating the film surface to form a layer. For example, ordinary coating methods such as gravure coating, reverse roll coating, wire bar coating and die coating can be adopted.

When the protective layer is formed, it is preferable to perform heating and drying after the resin composition for protective layer is applied. The drying temperature at that time is preferably 110°C to 190°C, more preferably 130°C to 185°C, still more preferably 150°C to 180°C. When the drying temperature is less than 110°C, insufficient drying may occur in the protective layer, or the formation of the protective layer does not proceed, and therefore a cohesive force and water resistant adhesive properties may decrease, resulting in decreases in barrier properties and hand-cutting properties. Meanwhile, when the drying temperature is higher than 190°C, the film is excessively heated, and therefore the film may be brittle, resulting in a decrease in puncture strength, or the film may shrink, resulting in deterioration in processability. In particular, by performing drying at 150°C or more, preferably 160°C or more, the formation of the protective layer effectively proceeds, and the adhesion area between the resin of the protective layer and the inorganic thin film layer further increases, and therefore water resistant adhesive properties can be improved. It is particularly preferable that the solvent is first volatilized at a relatively low temperature of 90°C to 110°C immediately after application of the protective film and then drying is performed at 150°C or more since a uniform film is obtained. In addition to drying, it is also more effective to perform an additional heat treatment in a low temperature range as much as possible in order to advance the formation of the protective layer.

As described above, the laminated film of the present invention has characteristics that gas barrier performance before treatment is excellent by using a polyester resin derived from PET bottles, which has less environmental burdens, as a substrate and barrier properties and adhesive properties to the inorganic thin film layer can be maintained even after severe heat-moisture treatment by further providing a covering layer.

[Packaging material]

When the laminated film of the present invention is used as a packaging material, it is preferable to form a laminated body on which a heat-sealable resin layer called a sealant is formed. The heat-sealable resin layer is usually provided on the inorganic thin film layer, but may be provided on the outside of the substrate film layer (the surface opposite to the covering layer forming surface). The heat-sealable resin layer is usually formed by an extrusion lamination method or a dry lamination method. As a thermoplastic polymer that forms the heat-sealable resin layer, any one may be used as long as the adhesive properties of sealant can be sufficiently exerted. Polyethylene resins such as HDPE, LDPE or LLDPE, a polypropylene resin, an ethylene-vinyl acetate copolymer, an ethylene-$\alpha$-olefin random copolymer,

an ionomer resin, and the like can be used.

[Adhesive Layer]

For the adhesive layer used in the present invention, a general-purpose adhesive for lamination can be used. For example, it is possible to used solvent (free) type, aqueous type, and hot melt type adhesives containing poly(ester) urethane-based materials, polyester-based materials, polyamide-based materials, epoxy-based materials, poly (meth)acrylic-based materials, polyethyleneimine-based materials, ethylene-(meth)acrylic acid-based materials, polyvinyl acetate-based materials, (modified) polyolefin-based materials, polybutadiene-based materials, wax-based materials, casein-based materials and the like as a main component. Among these, urethane-based or polyester-based materials are preferable in consideration of moisture and heat resistance that can withstand retorting treatment and flexibility that can follow the dimensional changes of each base material. As a method for laminating the adhesive layer, for example, the adhesive layer can be coated by a direct gravure coating method, a reverse gravure coating method, a kiss coating method, a die coating method, a roll coating method, a dip coating method, a knife coating method, a spray coating method, a fountain coating method, and other methods. The coated amount after drying is preferably 1 to 8 $g/m^2$ in order to exert sufficient adhesive properties after retorting. The applied amount is more preferably 2 to 7 $g/m^2$, still more preferably 3 to 6 $g/m^2$. When the applied amount is less than 1 $g/m^2$, it is difficult to paste the entire surface and the adhesive strength decreases. When the applied amount is more than 8 $g/m^2$, it takes time to completely cure the film, unreacted substances are likely to remain, and the adhesive strength decreases.

Furthermore, in the laminated film of the present invention, at least one or more printed layers, other plastic substrates and/or paper substrates may be laminated between the inorganic thin film layer or substrate film layer and the heat-sealable resin layer, or outside thereof.

As a printing ink for forming the printed layer, an aqueous and solvent-based resin-containing printing ink can be preferably used. Examples of the resin used in the printing ink include an acrylic resin, a urethane-based resin, a polyester-based resin, a vinyl chloride-based resin, a vinyl acetate copolymer resin, and a mixture thereof. The printing ink may contain known additives such as an anti-static agent, a light blocking agent, an ultraviolet absorber, a plasticizer, a lubricant, a filler, a coloring agent, a stabilizer, a lubricating agent, a defoaming agent, a crosslinking agent, an anti-blocking agent, and an oxidation inhibitor. The printing method for providing the printed layer is not particularly limited, and known printing methods such as an offset printing method, a gravure printing method, and a screen printing method can be used. In order to dry the solvent after printing, known drying methods such as hot air drying, hot roll drying, and infrared drying can be used.

The oxygen transmission rates of the laminated body of the present invention at 23°C and 65% RH before and after retorting are both preferably 15 $ml/m^2 \cdot d \cdot MPa$ or less from the viewpoint of exerting favorable gas barrier properties. The oxygen transmission rate can be set to preferably 12.5 $ml/m^2 \cdot d \cdot MPa$ or less, more preferably 10 $ml/m^2 \cdot d \cdot MPa$ or less by controlling the above-mentioned inorganic thin film layer components/attached amount. When the oxygen transmission rate is more than 15 $ml/m^2 \cdot d \cdot Mpa$, it is difficult to cope with uses required to exhibit high gas barrier properties. Meanwhile, it is not preferable that the oxygen transmission rates before and after retorting are both less than 1 $ml/m^2 \cdot d \cdot MPa$ since barrier performance is excellent, but the residual solvent is less likely to permeate to the outside of the bag, and the amount of the residual solvent transferred to the contents may relatively increases. A preferable lower limit of the oxygen transmission rate is 1 $ml/m^2 \cdot d \cdot MPa$ or more.

The water vapor transmission rates of the laminated body of the present invention at 40°C and 90% RH before and after retorting are both preferably 2.0 $g/m^2 \cdot d$ or less from the viewpoint of exerting favorable gas barrier properties. The water vapor transmission rate can be set to preferably 1.5 $g/m^2 \cdot d$ or less, more preferably 1.0 $g/m^2 \cdot d$ or less by controlling the above-mentioned inorganic thin film layer components/attached amount. When the water vapor transmission rate is more than 2.0 $g/m^2 \cdot d$, it is difficult to cope with uses required to exhibit high gas barrier properties. Meanwhile, it is not preferable that the water vapor transmission rates before and after retorting are both less than 0.1 $g/m^2$ since barrier performance is excellent, but the residual solvent is less likely to permeate to the outside of the bag, and the amount of the residual solvent transferred to the contents may relatively increases. A preferable lower limit of the water vapor transmission rate is 0.1 $g/m^2 \cdot d$ or more.

The watering lamination strengths of the laminated body of the present invention at 23°C and 65%RH before and after retorting are both preferably 1.0 N/15 mm or more, more preferably 1.5 N/15 mm or more, still more preferably 2.0 N/15 mm or more. When the lamination strength is less than 1.0 N/15 mm, peeling off may occur by the bending load or liquid contents and the barrier properties may be degraded or the contents may leak. Furthermore, the hand-cutting properties may also deteriorate.

EXAMPLES

Next, the present invention will be described in more detail by way of Examples, but the present invention is not limited to the following examples.

(1) Glass transition point (Tg) of polyester resin

Using a differential scanning calorimetry apparatus (Model DSC6220 manufactured by SII Nanotechnology Co., Ltd.), 5 mg of resin sample was melted to 280°C in a nitrogen atmosphere, held for 5 minutes, and then rapidly cooled with liquid nitrogen, and the glass transition temperature thereof was measured from room temperature at a rate of temperature rise of 20°C/min.

(2) Intrinsic viscosity (IV) of polyester resin

In 50 ml of a mixed solvent of phenol/1,1,2,2-tetrachloroethane (60/40 (weight ratio)), 0.2 g of polyester resin was dissolved, and the intrinsic viscosity thereof was measured at 30°C using an Ostwald viscometer. The unit is dl/g.

(3) Content rates of terephthalic acid and isophthalic acid components contained in raw material polyester and polyester constituting film

Sample solution was prepared by dissolving in a solvent containing a 10:1 (by volume) mixture of Chloroform D (manufactured by Yurisop) and Trifluoroacetic Acid D1 (manufactured by Yurisop), and using NMR ("Gemini-200"; manufactured by Varian, Inc.) to measure proton NMR of the sample solution under measurement conditions of temperature 23°C and 64 integrated iterations. In the NMR measurement, the peak intensity of a predetermined proton was calculated, and the content rates (mol%) of the terephthalic acid component and the isophthalic acid component in 100 mol% of the acid components were calculated.

(4) Thickness of substrate film

The thickness of substrate film was measured using a dial gauge in conformity with JIS K7130-1999 method A.

(5) Thermodynamic crystallization temperature of substrate film

The measurement was performed on 8 mg of a sample cut from the film for evaluation using a differential scanning calorimeter (DSC60) manufactured by Shimadzu Corporation.
Scanning was performed by adjusting the sample temperature in the order of

1. temperature rising from 25°C to 320°C at 10°C/min
2. quenching to 25°C at 300°C/min
3. holding at 25°C for 3 minutes
4. temperature rising from 25°C to 320°C at 10°C/min,

and the peak top temperature of the exothermic curve of thermodynamic crystallization in 4. was taken as the thermodynamic crystallization temperature (Tc1).

(6) Heat shrinkage rate of substrate film in machine and transverse directions

A substrate film was sampled in 10 mm width and marked at intervals of 200 mm with marked lines at room temperature (27°C), and the intervals (L0) between the marked lines were measured. Thereafter, the film was sandwiched between sheets of paper, placed in a hot air oven controlled to a temperature of 150°C, treated for 30 minutes, and then taken out. Thereafter, the intervals (L) between the marked lines were measured and the heat shrinkage rate was determined from the following equation. Sampling was carried out in both the machine direction and the transverse direction for the measurement.

```
Heat shrinkage rate (%) = {(L0 - L)/L0} × 100
```

(7) Composition/film thickness of inorganic thin film layer

The film thickness and composition of the laminated film (after lamination of a thin film) obtained in each of Examples and Comparative Examples were measured by a calibration curve prepared in advance using an X-ray fluorescence analyzer ("ZSX 100e" manufactured by Rigaku Corporation). The conditions of x-ray excitation tube were set to 50 kV and 70 mA.

(8) Amount of covering layer attached

In each of Examples and Comparative Examples, each laminated film obtained at the stage of laminating a covering layer on a substrate film was used as a sample, and a test piece of 100 mm $\times$ 100 mm was cut out from this sample. The covering layer was wiped off with 1-methoxy-2-propanol or dimethylformamide, and the attached amount was calculated from the mass change of the film after wiping.

(9) Method for measuring surface hardness of laminated film

The surface hardness of the laminated film was measured using a dynamic ultra-micro hardness meter ("DUH-211" manufactured by Shimadzu Corporation). In detail, a hardness measurement test was conducted on the protective layer surface of a single laminated film fixed to and held on a glass plate with an adhesive by a load-unloading test using a diamond triangular pyramid indenter (Berkovich type) with a ridge angle of 115°, and the obtained Martens hardness was taken as the value of surface hardness. The test conditions were a test force of 1.0 mN, a loading rate of 0.02 mN/sec, and a holding time of 2 seconds. The value of hardness measured under the present conditions is 0.3 um or more for the indentation depth, which was sufficiently large compared to the thickness of the covering layer and inorganic thin film layer, and was interpreted to represent the surface hardness of the substrate.

(10) Method for measuring arithmetic mean roughness of laminated film

The surface roughness of the laminated film was measured with use of a scanning probe microscope (SPM) ("SPM9700" manufactured by Shimadzu Corporation) (cantilever: OMCL-AC200TS available from Olympus Corporation was used, observation mode: phase mode). Specifically, an SPM image was obtained within a 2-pm square field angle on the film surface. In the obtained image, inclination correction, which was a function of a software attached to the SPM, was used so as to perform inclination correction in X-, Y-, and Z-directions, and thereafter the value of an arithmetic mean roughness was calculated. The arithmetic mean roughness Ra was a value obtained by removing a surface undulation component longer than a predetermined wavelength from a cross-sectional curve by a high-pass filter, extracting only a reference length in the direction of the average line of a roughness curve obtained thereby from the roughness curve, taking an X axis in the direction of the average line of the extracted portion and a Y axis in the direction of a vertical magnification ratio, and two-dimensionally expanding a value obtained by the following formula when the roughness curve was represented by y=f(X).

$$\mathrm{Ra} = 1/\mathrm{L}\int_0^{\mathrm{L}} |f(x)|dx \qquad \mathrm{L:\ Reference\ length}$$

(11) Method for measuring coefficient of friction of laminated film

The coefficient of static friction $\mu$s and the coefficient of dynamic friction $\mu$d on the vapor-deposited surface and non-vapor-deposited surface of the film were measured in a humid atmosphere of 50% RH in conformity with the ASTM-D-1894 method.

[Fabrication of laminated body]

A 15 $\mu$m thick nylon film ("N1100" manufactured by Toyobo Co., Ltd.) was bonded on the laminated bodies obtained in Examples and Comparative Examples by a dry lamination method using a urethane-based two-component curing adhesive ("TAKELAC (registered trademark) A525S" and "TAKENATE (registered trademark) A50" manufactured by Mitsui Chemicals, Inc. blended at a ratio of 13.5 : 1 (mass ratio)). Next, a 70 um thick un-stretched polypropylene film ("P1146" manufactured by Toyobo Co., Ltd.) as a heat-sealable resin layer was bonded on the nylon film by a dry lamination method using the same urethane-based two-component curing adhesive as above, and aging was performed at 40°C for 4 days to obtain a gas barrier laminated body for evaluation (hereinafter sometimes referred to as "laminated body A"). The thickness of the adhesive layer formed of the urethane-based two-component curable adhesive after drying was about 4 $\mu$m in all cases.

(12) Method for evaluating oxygen transmission rate

The normal oxygen transmission rate of the laminated body fabricated in the [fabrication of laminated body] was measured in an atmosphere having a temperature of 23°C and a humidity of 65% RH in conformity with the JIS-K7126 B method using an oxygen permeation analyzer ("OX-TRAN (registered trademark) 1/50" manufactured by AMETEK MOCON). The oxygen transmission rate was measured in the direction in which oxygen permeated from the substrate film side of the laminated body to the heat-sealable resin layer side. On the other hand, the oxygen transmission rate (after retorting) of the laminated body after heat-moisture treatment obtained by holding the laminated body fabricated in the [fabrication of laminated body] in hot water at 130°C for 30 minutes for a heat-moisture treatment and drying the laminated body at 40°C for 1 day (24 hours) was measured in the same manner as above.

(13) Method for evaluating water vapor transmission rate

The normal water vapor transmission rate of the laminated body fabricated in the [fabrication of laminated body] was measured in an atmosphere having a temperature of 40°C and a humidity of 90% RH in conformity with the JIS-K7129 B method using a water vapor permeation analyzer ("PERMATRAN-W3/33MG" manufactured by AMETEK MOCON). The water vapor transmission rate was measured in the direction in which water vapor permeated from the heat-sealable resin layer side of the laminated body to the substrate film side.
On the other hand, the water vapor transmission rate (after retorting) of the laminated body after heat-moisture treatment obtained by holding the laminated body fabricated in the [fabrication of laminated body] in hot water at 130°C for 30 minutes for a heat-moisture treatment and drying the laminated body at 40°C for 1 day (24 hours) was measured in the same manner as above.

(14) Method for evaluating lamination strength

The laminated body fabricated above was cut into a test piece having a width of 15 mm and a length of 200 mm, and the lamination strength (normal state) was measured at a temperature of 23°C and a relative humidity of 65% using a Tensilon universal material testing machine ("Tensilon UMT-II-500 type" manufactured by Toyo Baldwin Co., Ltd.). As the measurement of lamination strength, the strength was measured when water was applied between the laminated film layer and the heat-sealable resin layer of each of the laminated films obtained in Examples and Comparative Examples and the layers were peeled off from each other at a peeling angle of 90 degrees at a tensile speed of 200 mm/min.
On the other hand, retorting in which the laminated body fabricated above was held in pressurized hot water at 130°C was performed for 30 minutes. Thereafter, a test piece was immediately cut out from the obtained laminated body after retorting in the same manner as above and subjected to the measurement of lamination strength (after retorting) in the same manner as above.

(15) Evaluation of processability of laminated film

On the film rolls after winding when the laminated bodies described in Examples and Comparative Examples were vapor-deposited, inspection of the presence or absence of wrinkles, pock marks, miswinding, and blocking was performed. Those not having any fault were evaluated as o, those having any one fault were evaluated as △, and those having two or more faults were evaluated as ×.
The details of the polyester resin chips used in the present Examples and Comparative Examples are described below. The polyester resin chips were used in Examples 1 to 7 and Comparative Examples 1 to 5.

(Polyester resin A): Mechanically recycled polyester resin

The following method was used to synthesize mechanically recycled polyester resin employing recycled PET bottles, the polyester resin being used to fabricate the biaxially oriented polyester film to be described later.
Foreign substances such as the remaining beverages were washed away from the PET bottles for beverages, and then the PET bottles for beverages were crushed to obtain flakes. The flakes that were obtained were made to undergo cleaning while agitating in 3.5% by weight sodium hydroxide solution, conditions at this time being flake concentration 10% by weight, 85°C, and 30 minutes. Following alkali cleaning, the flakes were removed therefrom, and were made to undergo cleaning while agitating using distilled water, conditions at this time being flake concentration 10% by weight, 25°C, and 20 minutes. This washing with water was repeated 2 times more by exchanging distilled water. After being washed with water, the flakes were dried and then melted using an extruder, finer foreign substances were filtered out 2 times more by changing the filter to one having a smaller opening size in order, and finer foreign substances were filtered out using a filter having the smallest opening size of 50 μm on the third time to obtain polyester resin A having an intrinsic viscosity of 0.69 dl/g and an isophthalic acid content rate of 3.0 mol%.

(Polyester resin B)

As PET resin derived from fossil fuel that was used to fabricate biaxially oriented polyester film as described below, terephthalic acid//ethylene glycol = 100//100 (mol%) (intrinsic viscosity 0.62 dl/g; manufactured by Toyobo Co., Ltd.) was used.

(Polyester resin C): Chemically recycled polyester resin

The following method was used to synthesize chemically recycled polyester resin reconstituted from PET bottles that was used to fabricate biaxially oriented polyester film as described below.

A bale of PET bottles that had been separated, collected, and recovered were fed into a wet grinder, pulverization was carried out while 1,000 liters of water to which 500 g of liquid kitchen detergent had been added was made to circulate within the foregoing wet grinder, a gravimetric separator connected to the grinder was used to cause sedimentation of metal, sand, glass, and other such substances of high specific gravity, and flakes were extracted from the fraction at the upper layer thereof. These flakes were washed with pure water and made to undergo centrifugal dewatering to produce recovered flakes.

30 kg of the foregoing recovered flakes that had been melted while in an undried state were loaded into an autoclave equipped with an agitator and in which there was a liquid mixture of 150 g of zinc acetate dihydrate and 150 kg of ethylene glycol that had been preheated, and following removal of the fractions of boiling point lower than ethylene glycol such as acetic acid and water, a reflux condenser was used to react this for 4 hours at a temperature of 195°C to 200°C.

Following completion of the reaction, the temperature of the contents of the reaction vessel was lowered to 97°C to 98°C, and a filter was used to carry out hot filtration to remove suspended matter and sediment.

Following hot filtration, the filtrate was further cooled, and after confirming that the crude BHET was completely dissolved, prepurification treatment was performed by causing this to pass through an activated carbon bed and then through an anion/cation exchange mixed bed for 30 minutes at 50°C to 51°C.

The prepurification-treated solution was again loaded into an agitating-type autoclave, and heated to distill the excess ethylene glycol therefrom at normal pressure to obtain a concentrated BHET melt.

The concentrated BHET melt that was obtained was allowed to cool naturally while being agitated in a nitrogen gas atmosphere, and this was thereafter removed from the autoclave to obtain a concentrated BHET chip block.

This chip block was again heated to 130°C and melted, following which this was supplied by means of a metering pump to a thin film vacuum evaporator, where evaporation and cold condensation were carried out to obtain purified BHET.

This purified BHET was used as raw material to carry out melt polymerization to obtain chemically recycled Polyester Resin C having an intrinsic viscosity of 0.696 dl/g.

(Polyester resin D)

The temperature of an esterification reaction vessel was increased, and at the point in time when 200°C was reached, a slurry consisting of terephthalic acid [86.4 parts by mass] and ethylene glycol [64.4 parts by mass] was loaded thereinto, and catalyst in the form of antimony trioxide [0.017 part by mass] and triethylamine [0.16 part by mass] was added thereto while this was agitated. This was then heated and increased in temperature, and a pressure esterification reaction was carried out under the conditions of gauge pressure 0.34 MPa and 240°C.

Thereafter, the inside of the esterification reactor was returned to normal pressure, and magnesium acetate tetrahydrate [0.071 parts by mass] and then trimethyl phosphate [0.014 parts by mass] were added. Moreover, after 15 minutes had elapsed, temperature was increased to 260°C, following which trimethyl phosphate [0.012 part by mass], and then sodium acetate [0.0036 part by mass], were added thereto, following which, 15 minutes thereafter, a high-pressure disperser was used to carry out dispersion treatment, and 0.72 part by weight, based on particle content, of an ethylene glycol slurry of amorphous silica particles of average particle diameter 2.7 um was further added thereto. These silica particles are particles obtained by preparing an ethylene glycol slurry in advance, subjecting the slurry to centrifugal separation treatment to cut coarse particles by 35%, and then filtering the resultant slurry through a metal filter having an opening of 5 um. After 15 minutes, the obtained esterification reaction product was transferred to a polycondensation reactor, and a polycondensation reaction was conducted under reduced pressure at 280°C to obtain polyester resin D having an intrinsic viscosity of 0.62 dl/g.

The raw material resin chips are as presented in Table 1. The abbreviations in the table are as follows.

TPA: Terephthalic acid

EG: Ethylene glycol

[Table 1]

| | Dicarboxylic acid component | Polyhydric alcohol component | Isophthalic acid content rate | Silica | | SiO2 content | Intrinsic viscosity |
| | | | | Shape | Weight average particle diameter | | |
| | TPA | EG | | | | | |
| | mol% | mol% | mol% | - | μm | ppm | dl/g |
| Polyester resin A | 97 | 100 | 3.0 | - | - | - | 0.69 |
| Polyester resin B | 100 | 100 | 0 | - | - | - | 0.62 |
| Polyester resin C | 100 | 100 | 0 | - | - | - | 0.67 |
| Polyester resin D | 100 | 100 | 0 | Amorphous | 2.7 | 7200 | 0.62 |
| Polyester resin E | 100 | 100 | 0 | Amorphous | 2.7 | 300000 | 0.61 |

The details of the coating liquids used in the present Examples and Comparative Examples are described below. The coating liquids were used in Examples 1 to 7 and Comparative Examples 1 to 4.

[Carbodiimide-based crosslinking agent (A)]

As a carbodiimide-based crosslinking agent, commercially available "Carbodilite (registered trademark) SV-02" manufactured by Nisshinbo Chemical Inc. (solid content 40%) was prepared.

[Resin having oxazoline group (B)]

As the resin having an oxazoline group, a commercially available water-soluble oxazoline group-containing acrylate ("EPOCROS (registered trademark) WS-300" manufactured by Nippon Shokubai Co., Ltd.; solid content 10%) was prepared. The oxazoline group amount in this resin was 7.7 mmol/g.

[Acrylic resin (C)]

As the acrylic resin, a commercially available 25% by mass emulsion of acrylic ester copolymer ("MOVINYL (registered trademark) 7980" manufactured by Nichigo-Movinyl Co. Ltd.) was prepared. The acid value (theoretical value) of this acrylic resin was 4 mg KOH/g.

[Urethane resin (D)]

As the urethane resin, a commercially available polyester urethane resin dispersion ("TAKELAC (registered trademark) W605" manufactured by Mitsui Chemicals, Inc.; solid content 30%) was prepared. The acid value of this urethane resin was 25 mg KOH/g and the glass transition temperature (Tg) thereof measured by DSC was 100°C. The proportion of aromatic or aromatic aliphatic diisocyanate to the total polyisocyanate components measured by $^1$H-NMR was 55 mol%.

[Silane coupling agent (E)]

As a silane coupling agent, commercially available "KBM903 (registered trademark)" manufactured by Shin-Etsu Chemical Co., Ltd. (solid content 100%) was prepared. When used, the silane coupling agent was diluted with water to prepare a 2% aqueous solution.

[Urethane resin (F)]

In a four-necked flask equipped with a stirrer, a Dimroth condenser, a nitrogen inlet tube, a silica gel drying tube, and a thermometer, 143.95 parts by mass of meta-xylylene diisocyanate, 25.09 parts by mass of 4,4'-methylenebis(cyclohexyl isocyanate), 28.61 parts by mass of ethylene glycol, 5.50 parts by mass of trimethylolpropane, 12.37 parts by mass of dimethylolpropionic acid, and 120.97 parts by mass of methyl ethyl ketone as a solvent were mixed together, and stirred at 70°C in a nitrogen atmosphere, and it was confirmed that the reaction liquid reached the predetermined amine equivalent. Next, the reaction liquid was cooled to 35°C, and then 9.14 parts by mass of triethylamine was added to obtain a polyurethane prepolymer solution. Next, 794.97 parts by mass of water was added to a reaction vessel equipped with a homodisper capable of high-speed stirring, the temperature was adjusted to 15°C, the polyurethane prepolymer solution was added while stirring and mixing was performed at 2000 min$^{-1}$, and water dispersion was performed. An aqueous amine solution prepared by mixing 22.96 parts by mass of 2-[(2-aminoethyl)amino]ethanol and 91.84 parts by mass of water was added. Next, an aqueous amine solution prepared by mixing 2.38 parts by mass of N-2-(aminoethyl)-3-aminopropyltrimethoxysilane (trade name; KBM-603, manufactured by Shin-Etsu Chemical Co., Ltd.) and 9.50 parts by mass of water was added, and a chain elongation reaction was conducted. Thereafter, methyl ethyl ketone and a portion of water were removed under reduced pressure to obtain a polyurethane dispersion (E) having a solid content of 25% by mass and an average particle diameter of 70 nm. The obtained polyurethane dispersion (D-1) had a Si content (calculated based on the charged amount) of 1200 mg/1 kg and a meta-xylylene group content (calculated based on the charged amount) of 32% by mass.

[Coating liquid 1 used for covering layer]

The respective materials were mixed together at the following blending ratio to prepare a coating liquid (resin composition for covering layer).

| | |
|---|---|
| Water | 53.48% by mass |
| Isopropanol | 22.00% by mass |
| Oxazoline group-containing resin (B) | 18.70% by mass |
| Acrylic resin (C) | 3.74% by mass |
| Urethane resin (D) | 1.98% by mass |

[Coating liquid 2 used for covering layer]

The respective materials were mixed together at the following blending ratio to prepare a coating liquid (resin composition for covering layer).

| | |
|---|---|
| Water | 60.58% by mass |
| Isopropanol | 15.00% by mass |
| Oxazoline group-containing resin (B) | 18.70% by mass |
| Acrylic resin (C) | 3.74% by mass |
| Urethane resin (D) | 1.98% by mass |

[Coating liquid 3 used for covering layer]

The respective materials were mixed together at the following blending ratio to prepare a coating liquid (resin composition for covering layer).

| | |
|---|---|
| Water | 57.80% by mass |
| Isopropanol | 25.00% by mass |
| Carbodiimide-based crosslinking agent (A) | 2.10% by mass |
| Urethane resin (F) | 8.00% by mass |
| Silane coupling agent (E) | 7.10% by mass |

The method for fabricating the substrate film used in each of Examples and Comparative Examples will be described below. The substrate films were used in Examples 1 to 7 and Comparative Examples 1 to 4 and presented in Table 2.

(Fabrication of substrate film)

A film having a three-layer configuration was formed using three extruders. The base layer (B) contained 47.5% by mass of polyester resin A, 47.5% by mass of polyester resin C, and 5.0% by mass of polyester resin D, and the surface layer (A) contained 43.8% by mass of polyester resin A, 43.8% by mass of polyester resin C, and 12.5% by mass of polyester resin D. After each raw material resin was dried, the surface layer (A) forming mixed resin was melt-extruded from the first and third extruders at a resin temperature of 285°C, and the base layer (B) forming mixed resin was melted at a resin temperature of 285°C using the second extruder. These resins were merged and laminated so that the thickness ratio in the T-die was 1/10/1 (um) in the order of surface layer (A)/base layer (B)/surface layer (A) from the side coming into contact with the casting drum, discharged from a T-shaped mouthpiece, and cooled and solidified on the casting drum having a surface temperature of 25°C to obtain an un-stretched polyethylene terephthalate sheet.

At that time, static electricity was applied using a wire-shaped electrode having a diameter of 0.15 mm, and the sheet was brought into close contact with a cooling drum to obtain a three-layer un-stretched film.

The obtained un-stretched film was heated to 120°C using an infrared heater and stretched in one stage in the machine direction at a stretching ratio of 4.0 times. One surface of the film stretched in one stage was coated with the coating liquid 1 by a fountain bar coating method. Subsequently, the film was stretched in the transverse direction using a tenter type horizontal stretching machine at a preheating temperature of 120°C, a stretching temperature of 130°C, and a stretching ratio of 4.2 times. Furthermore, in the cooling region provided before the subsequent heat setting treatment region of the tenter, hot air was blocked by aluminum plates pasted on the top, bottom, left and right, and compressed air was sent to perform cooling so that the temperature in the cooling region was 70°C. Thereafter, heat setting was performed at 245°C and 5% heat relaxation treatment in the transverse direction was performed. Thereafter, the film was wound into a roll using a winder to fabricate a master roll (winding length: 60000 m, width: 8000 mm) of a biaxially oriented polyester film having a thickness of 12 um.

The biaxially oriented polyester film was unwound from the obtained master roll, and the film roll was wound around a winding core having a diameter of 6 inches (152.2 mm) while performing slitting at a width of 800 mm and applying surface pressure to the film roll using a contact roll and tension to the film using a 2-axis turret winder.

Table 2 presents the raw material composition and film forming conditions of the obtained film and the physical properties and evaluation results of the obtained film. Evaluation of the film was carried out at the surface layer (A) on the side that came in contact with the chill roller.

A biaxially stretched film was formed in the same manner as above except that the types and ratios of the polyester resins used for the surface layer (A) and base layer (B) as raw materials were changed and the type of the covering layer was changed in fabricating the substrate film layer described in each of Examples and Comparative Examples, and a biaxially oriented polyester film having a thickness of 12 μm was obtained. However, in a case where a covering layer was not provided, the surface layer (A) on the side in contact with the chill roller was subjected to corona treatment at 40 W min/m². Tables 2 and 3 present the raw material composition and film forming conditions of the obtained films and the physical properties and evaluation results of the obtained films. Evaluation of the substrate film was performed on the surface layer (A) on the side in contact with the chill roller.

Hereinafter, a method for fabricating the inorganic thin film layer used in each of Examples and Comparative Examples will be described. The substrate films were used in Examples 1 to 7 and Comparative Examples 1 to 4 and presented in Table 2.

(Formation of inorganic thin film layer M-1)

As an inorganic thin film layer M-1, aluminum oxide was vapor-deposited on the substrate film layer. As the method for vapor-depositing aluminum oxide on the substrate film layer, a film is set on the unwinding side of a continuous vacuum vapor-deposition machine and run through a cooling metal drum to wind up the film. At this time, the continuous vacuum vapor-deposition machine was evacuated to $10^{-4}$ Torr or less, metal aluminum with a purity of 99.99% was charged into an alumina crucible from the bottom of the cooling drum, and heated and evaporated, oxygen was supplied to the vapor of metal aluminum, and the vapor was attached and deposited on the film while undergoing an oxidation reaction, thereby forming an aluminum oxide film having a thickness of 10 nm.

(Formation of inorganic thin film layer M-2)

As an inorganic thin film layer M-2, a composite oxide layer composed of silicon dioxide and aluminum oxide was formed on the substrate film layer by an electron beam vapor-deposition method. Particulate $SiO_2$ (purity 99.9 %) and $Al_2O_3$ (purity 99.9%) having a size of about 3 mm to 5 mm were used as a vapor-deposition source. The film thickness of the inorganic thin film layer ($SiO_2/Al_2O_3$ composite oxide layer) in the film (inorganic thin film layer/covering layer-containing film) obtained as described above was 13 nm. The composition of the composite oxide layer was $SiO_2/Al_2O_3$ (mass ratio) = 60/40.

As described above, laminated films including covering layer/inorganic thin film layer on a substrate film were fabricated. The obtained laminated films were evaluated. The results are presented in Table 3.

[Table 2A]

| | | | Example 1 | | | Example 2 | | | Example 3 | | | Example 4 | | | Example 5 | | | Example 6 | | |
|---|---|---|---|---|---|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A | Layer A | Layer B | Layer A | Layer A | Layer B | Layer A |
| Substrate film | Resin chip mixing ratio (% by mass) | Polyester resin A | 43.8 | 47.5 | 43.8 | 21.9 | 23.8 | 21.9 | 78.8 | 85.5 | 78.8 | 43.8 | 47.5 | 43.8 | 43.8 | 47.5 | 43.8 | 43.8 | 47.5 | 43.8 |
| | | Polyester resin B | – | – | – | – | – | – | – | – | – | – | – | – | – | – | – | – | – | – |
| | | Polyester resin C | 43.8 | 47.5 | 43.8 | 65.6 | 71.3 | 65.6 | 8.75 | 9.5 | 8.75 | 43.8 | 47.5 | 43.8 | 43.8 | 47.5 | 43.8 | 43.8 | 47.5 | 43.8 |
| | | Polyester resin D | 12.5 | 5 | 12.5 | 12.5 | 5 | 12.5 | 12.5 | 5 | 12.5 | 12.5 | 5 | 12.5 | 12.5 | 5 | 12.5 | 12.5 | 5 | 12.5 |
| | | Polyester resin E | – | – | – | – | – | – | – | – | – | – | – | – | – | – | – | – | – | – |
| | Particles | Shape of silica | Amorphous | | | Amorphous | | | Amorphous | | | Amorphous | | | Amorphous | | | Amorphous | | |
| | | Weight average particle diameter of silica (μm) | 2.7 | | | 2.7 | | | 2.7 | | | 2.7 | | | 2.7 | | | 2.7 | | |
| | | Amount of silica added (ppm by weight) | 900 | 360 | 900 | 900 | 360 | 900 | 900 | 360 | 900 | 900 | 360 | 900 | 900 | 360 | 900 | 900 | 360 | 900 |
| | Film forming step | Cooling region | Presence | | | Presence | | | Presence | | | Presence | | | Presence | | | Presence | | |
| | | Thickness of T-die layer (μm) | A/B/A= 1/10/1 | | | A/B/A= 1/10/1 | | | A/B/A= 1/10/1 | | | A/B/A= 1/10/1 | | | A/B/A= 1/10/1 | | | A/B/A= 1/10/1 | | |
| | | Application of static electricity | Wire-shaped electrode diameter 0.15 mm | | | Wire-shaped electrode diameter 0.15 mm | | | Wire-shaped electrode diameter 0.15 mm | | | Wire-shaped electrode diameter 0.15 mm | | | Wire-shaped electrode diameter 0.15 mm | | | Wire-shaped electrode diameter 0.15 mm | | |
| | | Chill roller cooling temperature (°C) | 25 | | | 25 | | | 25 | | | 25 | | | 25 | | | 25 | | |
| | | Stretching temperature in machine direction (°C) | 120 | | | 120 | | | 120 | | | 120 | | | 120 | | | 120 | | |
| | | Stretching ratio in machine direction (times) | 4.0 | | | 4.0 | | | 4.0 | | | 4.0 | | | 4.0 | | | 4.0 | | |
| | | Preheating temperature in transverse direction (°C) | 120 | | | 120 | | | 120 | | | 120 | | | 120 | | | 120 | | |
| | | Stretching temperature in transverse direction (°C) | 130 | | | 130 | | | 130 | | | 130 | | | 130 | | | 130 | | |
| | | Stretching ratio in transverse direction (times) | 4.2 | | | 4.2 | | | 4.2 | | | 4.2 | | | 4.2 | | | 4.2 | | |
| | | Cooling region temperature (°C) | 70 | | | 70 | | | 70 | | | 70 | | | 70 | | | 70 | | |
| | | Heat setting temperature (°C) | 245 | | | 245 | | | 245 | | | 245 | | | 245 | | | 245 | | |
| | | Thermal relaxation rate in transverse direction (%) | 5 | | | 5 | | | 5 | | | 5 | | | 5 | | | 5 | | |
| | Properties | Film thickness (μm) | 12 | | | 12 | | | 12 | | | 12 | | | 12 | | | 12 | | |
| | | Crystallization temperature Tc1 (°C) | 135 | | | 137 | | | 133 | | | 135 | | | 135 | | | 135 | | |
| | | Heat shrinkage rate (%) Vertical | 1.4 | | | 1.3 | | | 1.3 | | | 1.4 | | | 1.4 | | | 1.4 | | |
| | | Heat shrinkage rate (%) Horizontal | 0.1 | | | 0.1 | | | 0.1 | | | 0.1 | | | 0.1 | | | 0.1 | | |

| | | | Example 1 | Example 2 | Example 3 | Example 4 | Example 5 | Example 6 |
|---|---|---|---|---|---|---|---|---|
| | | Isophthalic acid content rate (mol%) | 1.4 | 0.7 | 2.5 | 1.4 | 1.4 | 1.4 |
| Covering layer | Type of coating liquid | | Coating liquid 1 | Coating liquid 1 | Coating liquid 1 | Coating liquid 2 | Coating liquid 1 | Coating liquid 3 |
| | Attached amount [g/m²] | | 0.02 | 0.02 | 0.02 | 0.02 | 0.04 | 0.04 |
| Inorganic thin film layer | Type of inorganic layer | | M-2 | M-2 | M-2 | M-2 | M-2 | M-2 |
| | Thickness [nm] | | 13 | 13 | 13 | 13 | 13 | 13 |

[Table 2B]

| | | | Example 7 | | | Comparative Example 1 | | | Comparative Example 2 | | | Comparative Example 3 | | | Comparative Example 4 | | |
|---|---|---|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A | Layer A | Layer B | Layer A |
| Substrate film | Resin chip mixing ratio (% by mass) | Polyester resin A | 43.8 | 47.5 | 43.8 | - | - | - | 43.8 | 47.5 | 43.8 | 87.5 | 95 | 87.5 | 8.75 | 9.5 | 8.75 |
| | | Polyester resin B | - | - | - | 87.5 | 95 | 87.5 | - | - | - | - | - | - | - | - | - |
| | | Polyester resin C | 43.8 | 47.5 | 43.8 | - | - | - | 43.8 | 47.5 | 43.8 | - | - | - | 78.75 | 85.5 | 78.8 |
| | | Polyester resin D | 12.5 | 5 | 12.5 | 12.5 | 5 | 12.5 | 12.5 | 5 | 12.5 | 12.5 | 5 | 12.5 | 12.5 | 5 | 12.5 |
| | | Polyester resin E | - | - | - | - | - | - | - | - | - | - | - | - | - | - | - |
| | Particles | Shape of silica | Amorphous | | | Amorphous | | | Amorphous | | | Amorphous | | | Amorphous | | |
| | | Weight average particle diameter of silica (pm) | 2.7 | | | 2.7 | | | 2.7 | | | 2.7 | | | 2.7 | | |
| | | Amount of silica added (ppm by weight) | 900 | 360 | 900 | 900 | 360 | 900 | 900 | 360 | 900 | 900 | 360 | 900 | 900 | 360 | 900 |
| | | Cooling region | Presence | | | Presence | | | Presence | | | Presence | | | Presence | | |
| | | Thickness of T-die layer (μm) | A/B/A-1/10/1 | | | A/B/A-1/10/1 | | | A/B/A-1/10/1 | | | A/B/A-1/10/1 | | | A/B/A-1/10/1 | | |
| | | Application of static electricity | Wire-shaped electrode diameter 0.15 mm | | | Wire-shaped electrode diameter 0.15 mm | | | Wire-shaped electrode diameter 0.15 mm | | | Wire-shaped electrode diameter 0.15 mm | | | Wire-shaped electrode diameter 0.15 mm | | |
| | | Chill roller cooling temperature (°C) | 25 | | | 25 | | | 25 | | | 25 | | | 25 | | |

| | | | Example 7 | | | Comparative Example 1 | | | Comparative Example 2 | | | Comparative Example 3 | | | Comparative Example 4 | | |
|---|---|---|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A | Layer A | Layer B | Layer A |
| Film forming step | | Stretching temperature in machine direction (°C) | 120 | | | 130 | | | 120 | | | 120 | | | 120 | | |
| | | Stretching ratio in machine direction (times) | 4.0 | | | 4.0 | | | 4.0 | | | 4.0 | | | 4.0 | | |
| | | Preheating temperature in transverse direction (°C) | 120 | | | 130 | | | 120 | | | 120 | | | 120 | | |
| | | Stretching temperature in transverse direction (°C) | 130 | | | 140 | | | 130 | | | 130 | | | 130 | | |
| | | Stretching ratio in transverse direction (times) | 4.2 | | | 4.2 | | | 4.2 | | | 4.2 | | | 4.2 | | |
| | | Cooling region temperature (°C) | 70 | | | 70 | | | 70 | | | 70 | | | 70 | | |
| | | Heat setting temperature (°C) | 245 | | | 245 | | | 245 | | | 245 | | | 245 | | |
| | | Thermal relaxation rate in transverse direction (8) | 5 | | | 5 | | | 5 | | | 5 | | | 5 | | |

EP 4 393 698 A1

26

(continued)

| | | | Example 7 | | | Comparative Example 1 | | | Comparative Example 2 | | | Comparative Example 3 | | | Comparative Example 4 | | |
|---|---|---|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A | Layer A | Layer B | Layer A |
| | Properties | Film thickness (pm) | 12 | | | 12 | | | 12 | | | 12 | | | 12 | | |
| | | Crystallization temperature Tc1 (°C) | 135 | | | 144 | | | 132 | | | 132 | | | 137 | | |
| | | Vertical | 1.4 | | | 1.4 | | | 1.4 | | | 1.4 | | | 1.3 | | |
| | | Heat shrinkage rate (%) Horizontal | 0.1 | | | 0.1 | | | 0.1 | | | 0.1 | | | 0.1 | | |
| | | Isophthalic acid content rate (mol%) | 1.4 | | | 0.0 | | | 1.4 | | | 2.8 | | | 0.3 | | |
| Covering layer | Type of coating liquid | | Coating liquid 1 | | | Coating liquid 1 | | | Absence | | | Absence | | | Absence | | |
| | Attached amount [g/m$^2$] | | 0.02 | | | 0.02 | | | - | | | - | | | - | | |
| Inorganic thin film layer | Type of inorganic layer | | M-1 | | | M-2 | | | M-2 | | | M-1 | | | M-2 | | |
| | Thickness [nm] | | 10 | | | 13 | | | 13 | | | 10 | | | 13 | | |

EP 4 393 698 A1

EP 4 393 698 A1

[Table 3]

| | Evaluation item | | | | | | | | | | | | | | |
|---|---|---|---|---|---|---|---|---|---|---|---|---|---|---|---|
| | Single laminated film | | | | | | | | Laminated body A | | | | | | |
| | Surface hardness [N/mm$^2$] | Surface roughness Ra [nm] | Slipperiness | | Processability | Recycled resin content rate [8] | | | Oxygen transmission rate | | Water vapor transmission rate | | Lamination strength | | |
| | | | | | | | | | [ml/m$^2$·day·MPa] | | [g/m$^2$·day] | | [N/15 mm] | | |
| | | | Coefficient of static friction μs | Coefficient of dynamic friction μd | | Mechanical | Chemical | Sum | Before treatment | After retorting | Before treatment | After retorting | Before treatment | After retorting |
| Example 1 | 105 | 3.8 | 0.35 | 0.35 | ○ | 47 | 47 | 94 | 7 | 8 | 1.3 | 1.4 | 4.2 | 2.9 |
| Example 2 | 117 | 3.8 | 0.36 | 0.34 | ○ | 23 | 70 | 93 | 9 | 9 | 1.3 | 1.4 | 4.1 | 3.0 |
| Example 3 | 81 | 3.7 | 0.37 | 0.34 | ○ | 84 | 9 | 93 | 6 | 7 | 1.2 | 1.3 | 4.6 | 3.2 |
| Example 4 | 105 | 4.3 | 0.37 | 0.36 | ○ | 47 | 47 | 94 | 8 | 8 | 0.9 | 1.1 | 4.2 | 3.0 |
| Example 5 | 103 | 5.0 | 0.31 | 0.30 | ○ | 47 | 47 | 94 | 7 | 8 | 0.9 | 1.2 | 4.2 | 2.8 |
| Example 6 | 105 | 2.5 | 0.38 | 0.38 | ○ | 47 | 47 | 94 | 6 | 6 | 8.8 | 1.1 | 4.2 | 3.0 |
| Example 7 | 104 | 4.3 | 0.39 | 0.37 | ○ | 47 | 47 | 94 | 6 | 6 | 0.7 | 1.0 | 4.2 | 3.0 |
| Comparative Example 1 | 187 | 3.7 | 0.28 | 0.28 | ○ | 0 | 0 | 0 | 17 | 18 | 2.3 | 2.3 | 4.0 | 3.3 |
| Comparative Example 2 | 105 | 0.9 | 0.38 | 0.37 | ○ | 47 | 47 | 94 | 8 | 130 | 1.6 | 4.0 | 3.5 | 0.8 |
| Comparative Example 3 | 83 | 1.3 | 0.45 | 0.43 | Δ | 94 | 0 | 94 | 7 | 200 | 1.5 | 3.9 | 3.5 | 1.2 |
| Comparative Example 4 | 173 | 0.7 | 0.50 | 0.48 | × | 9 | 84 | 93 | 19 | 233 | 2.3 | 4.4 | 3.5 | 0.9 |

INDUSTRIAL APPLICABILITY

According to the present invention, it has become possible to provide a laminated film that is excellent in gas barrier properties of the inorganic thin film layer and excellent in barrier properties and adhesive properties even after a severe heat-moisture treatment such as retort sterilization while using recycled materials. Moreover, the laminated film of the present invention requires few processing steps, is excellent in processability, and can be easily produced, and a gas barrier film that is excellent in both economic efficiency and production stability and has homogeneous properties can be provided.

**Claims**

1.  A laminated film comprising a covering layer and an inorganic thin film layer on one surface of a substrate film, wherein the laminated film satisfies the following requirements (a) to (d):

    (a) the substrate film contains a polyester resin chemically recycled from PET bottles,
    (b) a surface hardness on an inorganic thin film layer surface of the laminated film is 120 N/mm$^2$ or less,
    (c) a coefficient of static friction us and a coefficient of dynamic friction $\mu$d of inorganic thin film layer surface/opposite side surface of the laminated film are both in a range of 0.20 to 0.40, and
    (d) an arithmetic mean roughness Ra across a 2 um square of an inorganic thin film layer surface of the laminated film is in a range of 2.0 to 6.0 nm.

2.  The laminated film according to claim 1, wherein the covering layer contains a resin having an oxazoline group or a carbodiimide group as a constituent component.

3.  The laminated film according to claim 1 or 2, wherein a content rate of an isophthalic acid component with respect to all carboxylic acid components in all polyester resins constituting the substrate film is 5.0 mol% or less.

4.  The laminated film according to any one of claims 1 to 3, wherein the inorganic thin film layer is a layer of aluminum oxide or a composite oxide of silicon oxide and aluminum oxide.

5.  The laminated film according to any one of claims 1 to 4, comprising a protective layer containing a urethane resin on the inorganic thin film layer.

6.  A packaging material comprising a sealant layer laminated on one surface of the laminated film according to any one of claims 1 to 5.

## INTERNATIONAL SEARCH REPORT

| International application No. |
| --- |
| **PCT/JP2022/031216** |

| A. | CLASSIFICATION OF SUBJECT MATTER |
| --- | --- |

*B32B 9/00*(2006.01)i; *B32B 27/36*(2006.01)i; *B65D 65/40*(2006.01)i
FI:  B32B9/00 A; B32B27/36; B65D65/40 D

According to International Patent Classification (IPC) or to both national classification and IPC

| B. | FIELDS SEARCHED |
| --- | --- |

Minimum documentation searched (classification system followed by classification symbols)

  B32B9/00; B32B27/36; B65D65/40

Documentation searched other than minimum documentation to the extent that such documents are included in the fields searched

  Published examined utility model applications of Japan 1922-1996
  Published unexamined utility model applications of Japan 1971-2022
  Registered utility model specifications of Japan 1996-2022
  Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2021/100558 A1 (TOYOBO CO., LTD.) 27 May 2021 (2021-05-27)<br>  claims, paragraphs [0022], [0094]-[0129], examples 9-11, table 1 | 1–6 |
| Y | JP 2011-256328 A (TOYO SEIKAN CO., LTD.) 22 December 2011 (2011-12-22)<br>  paragraphs [0006], [0011], [0022] | 1–6 |
| A | JP 2013-28160 A (TOYOBO CO., LTD.) 07 February 2013 (2013-02-07) | 1–6 |
| A | JP 2019-127536 A (TOYOBO CO., LTD.) 01 August 2019 (2019-08-01) | 1–6 |
| A | JP 2020-70429 A (DAI NIPPON PRINTING CO., LTD.) 07 May 2020 (2020-05-07) | 1–6 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 October 2022** | **01 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/031216**

| Patent document cited in search report | | | Publication date (day/month/year) | Patent family member(s) | | | Publication date (day/month/year) |
|---|---|---|---|---|---|---|---|
| WO | 2021/100558 | A1 | 27 May 2021 | TW | 202124147 | A | |
| JP | 2011-256328 | A | 22 December 2011 | (Family: none) | | | |
| JP | 2013-28160 | A | 07 February 2013 | US | 2013/0260144 | A1 | |
| | | | | WO | 2012/074030 | A1 | |
| | | | | EP | 2647500 | A1 | |
| | | | | TW | 201226193 | A | |
| | | | | CN | 103237659 | A | |
| | | | | KR | 10-2013-0125370 | A | |
| JP | 2019-127536 | A | 01 August 2019 | (Family: none) | | | |
| JP | 2020-70429 | A | 07 May 2020 | (Family: none) | | | |

Form PCT/ISA/210 (patent family annex) (January 2015)

**EP 4 393 698 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012091862 A
- JP 6500629 B
- JP 5560708 B
- JP 4524463 B
- JP 2000169623 A
- JP 2000302707 A